# EUROPÄISCHE PATENTSCHRIFT

(11) **EP 3 828 860 B1**
(45) Veröffentlichungstag und Bekanntmachung des Hinweises auf die Patenterteilung: **14.08.2024**
(21) Anmeldenummer: 20210182.0
(22) Anmeldetag: 27.11.2020
(51) Int. Cl.: G08B 13/08, G07C 9/00, G08B 25/00, H04W 52/02

(54) **VERFAHREN ZUM AUSGEBEN EINER NACHRICHT EINES SENSORSYSTEMS**
METHOD FOR OUTPUTTING A MESSAGE OF A SENSOR SYSTEM
PROCÉDÉ D'ÉMISSION D'UN MESSAGE D'UN SYSTÈME DE CAPTEUR

(30) Priorität: 28.11.2019 EP 19212277
(43) Veröffentlichungstag der Anmeldung: 02.06.2021
(73) Patentinhaber: dormakaba Schweiz AG, 8623 Wetzikon (CH)
(72) Erfinder: Mosberger, Philippe, 8623 Wetzikon (CH); Wyss, Stefan, 8124 Maur (CH); Groth, Uwe, 8623 Wetzikon (CH); Hofmann, Jan, 8623 Wetzikon (CH)
(74) Vertreter: Balder IP Law, S.L.

(56) Entgegenhaltungen:
- US-A1- 2012 280 783
- US-A1- 2017 175 419
- US-A1- 2018 091 327
- US-A1- 2018 340 350

## Beschreibung

Die Erfindung betrifft ein Verfahren zum Ausgeben einer Nachricht eines Sensorsystems und ein Sensorsystem für ein Verschlusselement zur Durchführung des Verfahrens. Das Sensorsystem umfasst eine Sensorvorrichtung. Bei dem Verschlusselement handelt es sich insbesondere um eine Tür oder ein Fenster.

Eine vorbekannte Sensorvorrichtung zeigt WO 2016/149723 A1, dort als Vorrichtung zum Detektieren bezeichnet.

Die Druckschrift US2017/175419 A1 offenbart ein Sensorsystem, das bei einer ungewöhnlichen Zustandsänderung eines Verschlusselements eine Nachricht zunächst an einen Benutzer und, falls dieser die Nachricht nicht quittiert, an weitere Benutzer sendet. Ob eine ungewöhnliche Zustandsänderung vorliegt, ermittelt das Sensorsystem anhand von historischen Daten.

Die Druckschrift US2018/340350 A1 offenbart ebenfalls ein Sensorsystem, das einem Benutzer eine Nachricht sendet, wenn sich der Zustand einer Tür ändert.

Die Druckschrift US2012/280783 A1 offenbart ein Schloss, bei dem neben einem Code als weitere Zugangsvoraussetzung die Position eines Benutzers geprüft wird.

Es ist Aufgabe vorliegender Erfindung, ein Verfahren zum Ausgeben einer Nachricht eines Sensorsystems für ein Verschlusselement, insbesondere eine Tür oder ein Fenster, anzugeben, das eine zuverlässige sowie situations- und bedarfsgerechte Ausgabe einer Nachricht ermöglicht.

Die Lösung der Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch ein Verfahren zum Ausgeben einer Nachricht eines Sensorsystem für ein Verschlusselement. Bei dem Verschlusselement handelt es sich insbesondere um eine Tür oder ein Fenster. Das Sensorsystem umfasst eine Sensorvorrichtung. Die im folgenden beschriebene Ausgestaltungen für das Sensorsystem und die Sensorvorrichtung finden entsprechend vorteilhafte Anwendung auf das erfindungsgemäße Verfahren. Ebenfalls kann das beschriebene Verfahren mit dem erfindungsgemäßen Sensorsystem und/oder der erfindungsgemäßen Sensorvorrichtung ausgeführt werden. Insbesondere wird ein Verfahren mit einem Sensorsystem nach Anspruch 17 unter Schutz gestellt als auch ein Sensorsystem, mit dem ein Verfahren nach einem der Ansprüche 1 bis 16 durchgeführt werden kann.

Die Sensorvorrichtung kann kabelgebunden oder kabellos mit einer übergeordneten elektronischen Recheneinheit verbunden sein. Das Sensorsystem kann die Sensorvorrichtung und die übergeordneter Recheneinheit umfassen. Allerdings kann die Rechenleistung auch in der Sensorvorrichtung erbracht werden, sodass die übergeordnete Recheneinheit nicht notwendig ist und folglich die Sensorvorrichtung als Sensorsystem ausgebildet ist.

Die optionale Recheneinheit, insbesondere eine Cloud, ist außerhalb der Sensorvorrichtung angeordnet. Die Recheneinheit kann über ein lokales Netzwerk oder das Internet mit der Sensorvorrichtung zur Kommunikation (auch als Datenübertragung bzw. Datenaustausch bezeichnet) verbunden sein. Insbesondere ist vorgesehen, die Recheneinheit weit entfernt von der Sensorvorrichtung anzuordnen.

Das Sensorsystem umfasst ein insbesondere mobiles Benutzergerät, z. B. einem Mobiltelefon, ein Tablet, einem Laptop oder ist zur Kommunikation mit dem mobilen Benutzergerät ausgebildet.

Ferner kann das Sensorsystem eine elektronische Erfassungseinheit aufweisen, die außerhalb der Sensorvorrichtung, aber insbesondere in dessen drahtlosem Kommunikationsbereich, angeordnet ist. Die Erfassungseinheit, beispielsweise ausgebildet als Router oder Gateway, kann die datenübertragende Verbindung zwischen der Recheneinheit und der Sensorvorrichtung darstellen. Die Erfassungseinheit kann die datenübertragende Verbindung zwischen dem Benutzergerät und der Sensorvorrichtung darstellen. Die Erfassungseinheit ist vorgesehen, in der Nähe der Sensorvorrichtung angeordnet zu werden. Die Erfassungseinheit ist zur ortsfesten Installation im Kommunikationsbereich der Sensorvorrichtung ausgebildet.

Die Sensorvorrichtung umfasst vorzugsweise eine Sende- und/oder Empfangseinheit. Die Sende- und/oder Empfangseinheit ist zur Kommunikation, also Datenübertragung, insbesondere drahtlos, mit dem Benutzergerät und/oder der Erfassungseinheit und/oder der Recheneinheit ausgebildet.

Die Sende- und/oder Empfangseinheit ist bevorzugt für eine kabellose Nahbereichskommunikation, z. B. Bluetooth Low Energie oder NFC, ausgebildet. Die Sende- und/oder Empfangseinheit ist bevorzugt nur für eine kabellose Nahbereichskommunikation, insbesondere Bluetooth Low Energie oder NFC, ausgebildet. Die Sende- und/oder Empfangseinheit kommuniziert insbesondere mit der Erfassungseinheit über die kabellose Nahbereichskommunikation. Die Erfassungseinheit befindet sich bevorzugt innerhalb des Kommunikationsbereichs der Sende- und/oder Empfangseinheit.

Die Recheneinheit befindet sich insbesondere außerhalb des Kommunikationsbereichs der Sende- und/oder Empfangseinheit.

Es ist vorgesehen, dass die in der Sensorvorrichtung angeordnete Sende- und/oder Empfangseinheit über die Erfassungseinheit und/oder direkt mit dem Benutzergerät kommuniziert. Die Sende- und/oder Empfangseinheit kann mit dem Benutzergerät unmittelbar kabellos kommunizieren, sofern sich das Benutzergerät in dem Kommunikationsbereich der Sende- und/oder Empfangseinheit befindet.

Darüber hinaus kann auch die Kommunikation von der Sende- und/oder Empfangseinheit über die Erfassungseinheit und die Recheneinheit mit dem Benutzergerät erfolgen. Dies ist insbesondere dann der Fall, wenn das Benutzergerät mit der Recheneinheit über ein externes Netz, insbesondere das Internet oder ein Telekommunikationsnetzwerk, kommuniziert und/oder sich das Benutzergerät außerhalb des Kommunikationsbereichs der Sende- und/oder Empfangseinheit befindet. Die Erfassungseinheit und die Recheneinheit können über das Internet und/oder ein Telekommunikationsnetz verbunden sein.

Die Sensorvorrichtung umfasst zumindest einen Sensor. Am Sensor ist vorzugsweise eine Sensorachse definiert.

Der Sensor wiederum umfasst vorzugsweise zumindest eine Spule. Der Einfachheit halber wird im Folgenden stellenweise eine/die Spule beschrieben; dabei ist aber stets zu verstehen, dass vorzugsweise mehrere koaxiale Spulen zur Anwendung kommen. Mit der zumindest einen Spule werden vorzugsweise unterschiedliche Impedanzen und/oder unterschiedliche induzierte Spannungen erfasst.

Alternativ ist der Sensor beispielsweise als Lichtschranke ausgebildet, wobei insbesondere Helligkeitsänderungen am Empfänger der Lichtschranke erfasst werden.

In einer weiteren Alternative ist der Sensor als Hall-Sensor oder als Reedschalter ausgebildet.

In einer weiteren Alternative ist der Sensor als Schalter, insbesondere als Mikroschalter, oder als Kontaktfolie ausgebildet sein.

Es ist denkbar, dass der Sensor als Beschleunigungssensor ausgebildet ist.

Ist der Sensor als Spule ausgebildet, so weist die Spule insbesondere zumindest eine Wicklung auf, die sich um eine Spulenachse erstreckt; wobei die Spulenachse der Sensorachse entspricht. Die Spule dient insbesondere dazu, von einem Riegelelement durchdrungen zu werden. Die Spule ist also dazu ausgebildet, von einem Riegelelement durchdrungen zu werden.

Besonders bevorzugt weist der Sensor eine Durchgangsaussparung, rundum die Sensorachse, auf. Die Durchgangsaussparung ist dazu ausgebildet, von dem Riegelelement durchdrungen zu werden. Dabei bewegt sich das Riegelelement vorzugsweise parallel zur Sensorachse. Die bevorzugt verwendete Spule erstreckt sich rund um die Durchgangsaussparung.

Des Weiteren umfasst die Sensorvorrichtung bevorzugt eine Elektrik. Die Elektrik ist insbesondere zur Stromversorgung und/oder Ansteuerung des Sensors, insbesondere der Spule(n), ausgebildet. Vorzugsweise ist die Elektrik zumindest teilweise elektrisch leitend mit dem Sensor, insbesondere der Spule(n), verbunden. Unter "Ansteuerung des Sensors bzw. der Spule" ist zu verstehen, dass die Elektrik den Sensor, insbesondere die Spule, mit einem bestimmten Signal beaufschlagt und/oder dazu ausgebildet ist, ein im Sensor erzeugtes Signal, insbesondere in der Spule induziertes Signal, zu erfassen.

Die Elektrik umfasst vorzugsweise eine Elektronik. Die Elektronik umfasst insbesondere die Sende- und/oder Empfangseinheit.

Die Elektronik umfasst bevorzugt eine elektronische Steuereinheit, insbesondere einen Prozessor oder Controller. Die Steuereinheit umfasst insbesondere einen nicht flüchtigen Speicher. Insbesondere ist die Elektronik aus mehreren Elektronikbauteilen zusammengesetzt. Die Elektronik ist insbesondere zum Ansteuern des Sensors ausgebildet.

Bei Verwendung von einer Spule bzw. mehreren Spulen erfolgt dabei die Ansteuerung der zumindest einen Spule, vorzugsweise aller Spulen. Dabei erfolgt insbesondere ein Beaufschlagen der Spule(n) mit einem Signal und oder ein Abnehmen eines Signals an der/den Spulen(n).

Das Verschlusselement, beispielsweise ausgebildet als Tür oder Fenster, weist ein Türblatt oder Fensterblatt auf. Dieses Türblatt oder Fensterblatt kann "geöffnet" oder "geschlossen" sein. Des Weiteren weist das Verschlusselement vorzugsweise ein Riegelelement auf. Dieses Riegelelement ist beispielsweise ein Riegel oder eine Falle eines Einsteckschlosses im Türblatt. Das Riegelelement weist den Zustand "Riegel-Ausgefahren" oder "Riegel-Eingefahren" auf. In dem "Riegel-Ausgefahren"-Zustand ragt das Riegelelement weiter von dem Verschlusselementblatt ab als in dem "Riegel-Eingefahren" Zustand. Daraus ergeben sich Betriebszustände des Verschlusselements, nämlich "geöffnet" oder "geschlossen" und/oder "Riegel-Ausgefahren" oder "Riegel-Eingefahren". Bevorzugt werden sowohl der Zustand des Tür- bzw. Fensterblatts als auch des Riegelelements zu einem Betriebszustand kombiniert. Hierdurch ergeben sich vier grundsätzlichen Betriebszustände des Verschlusselementes: Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand.

Zwischen dem Türblatt bzw. dem Fensterblatt, allgemein als Verschlusselementblatt bezeichnet, und einem umgebenden Verschlusselementrahmen ist ein Verschlusselementspalt ausgebildet. Am Beispiel der Tür ist insbesondere vorgesehen, dass im Türblatt ein Einsteckschloss angeordnet ist. In Richtung des Verschlusselementspalts schließt das Einsteckschloss mit dem Stulp ab. Auf der gegenüberliegenden Seite, im Verschlusselementrahmen montiert oder als integraler Bestandsteil des Verschlusselementrahmens, befindet sich das Schließblech. Aus dem Stulp heraus kann sich ein Riegelelement erstrecken. Dieses Riegelelement erstreckt sich z. B. durch den Verschlusselementspalt hindurch entlang der Sensorachse bis in eine entsprechende Öffnung im Schließblech. Dieses Riegelelement ist insbesondere ein Riegel oder eine Falle. Beim Fenster gibt es entsprechende Elemente, die sich durch den Verschlusselementspalt hindurch bis in eine entsprechende Öffnung des Verschlusselementrahmens erstrecken können.

Die hier vorgestellte Sensorvorrichtung ist bevorzugt dazu ausgebildet, um in diesem Verschlusselementspalt angeordnet zu werden. Insbesondere befindet sich die Sensorvorrichtung dabei auf einer dem Verschlusselementspalt zugewandten Seite eines ersten Verschlusselementteils, insbesondere des Verschlusselementblattes (insbesondere des Stulpes) oder des Rahmens (insbesondere des Schließblechs). Das gegenüberliegende Teil ohne Sensorvorrichtung wird als "zweites Verschlusselementteil" bezeichnet. Die Sensorvorrichtung ist dabei so angeordnet, dass die Sensorachse mit dem Riegelelement und der zugehörigen Öffnung fluchtet. Besonders bevorzugt ist die Sensorvorrichtung dabei verschlusselementblattseitig (insbesondere türblattseitig bzw. fensterblattseitig) angeordnet.

Das Sensorsystem ist dazu ausgebildet, unterschiedliche Betriebszustände, des Verschlusselements zu erfassen. Es kann sein, dass das Sensorsystem erfasst, ob das Türblatt oder Fensterblatt "geöffnet" oder "geschlossen" ist. Zusätzlich oder alternativ kann das Sensorsystem erfassen, ob das Riegelelement eingefahren oder ausgefahren ist. Insbesondere kann das Sensorsystem die Betriebszustände des Verschlusselementes: Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand erfassen. Daraus ergibt sich die Möglichkeit, entsprechende Hinweise über den Betriebszustand und/oder einen sich aus dem Betriebszustand ergebenen Manipulationsversuch und/oder sonstige Gegebenheiten zu senden.

Dies wird allgemein als "Nachricht" bezeichnet.

Um sicherzustellen, dass der richtige Benutzer die Nachricht erhält, dass die Nachricht den richtigen Inhalt aufweist und/oder dass der Benutzer nicht zu viele Nachrichten erhält, ist erfindungsgemäß vorgesehen, dass in einem Verfahren zum Ausgeben einer Nachricht des Sensorsystems für ein Verschlusselement nur dann die Nachricht ausgegeben wird, wenn sowohl ein vorgegebener Betriebszustand als auch eine weitere "Zusatzinformation" vorliegt. Der Betriebszustand, der mit dem Sensorsystem, insbesondere der Sensorvorrichtung, erfasst wird, wird folglich kombiniert mit der Zusatzinformation. Wenn beide Werte einer Vorgabe entsprechen, wird die Nachricht ausgegeben.

Der ermittelte Betriebszustand entspricht einer ersten Vorgabe und die Zusatzinformation einer zweiten Vorgabe, damit die Nachricht ausgegeben wird. Das Verfahren wird insbesondere in dem vorliegend beschriebenen Sensorsystem durchgeführt.

Das erfindungsgemäße Verfahren umfasst die folgenden Schritte: Ermitteln eines vorliegenden Betriebszustandes des Verschlusselements mittels zumindest eines Sensors einer Sensorvorrichtung des Sensorsystems. Das gesamte Sensorsystem sowie die insbesondere zumindest vier Betriebszustände wurden schon vorab im Detail erläutert. Daraufhin erfolgt ein Erfassen einer Zusatzinformation. Diese Zusatzinformation ist unabhängig von der Sensorvorrichtung und/oder dem Verschlusselement. Beispielsweise betrifft diese Zusatzinformation eine Information über einen Benutzer, also eine Person, oder beispielsweise eine sonstige Information aus dem Gebäude, in dem das Verschlusselement verbaut ist. Im nächsten Schritt erfolgt die Ausgabe einer Nachricht, wenn zumindest der ermittelte Betriebszustand einer Vorgabe entspricht und insbesondere gleichzeitig die erfasste Zusatzinformation einer Vorgabe entspricht.

Das Erfassen der Zusatzinformation bedeutet im einfachsten Fall lediglich das Kenntniserlangen über diese Zusatzinformation. In das Sensorsystem gelangt diese Zusatzinformation insbesondere über ein lokales Netzwerk oder das Internet. Hierzu kann diese Information sowohl über die Recheneinheit, die Erfassungseinheit oder das Benutzergerät in das Sensorsystem gelangen. Darüber hinaus ist es auch möglich, die Information direkt in die Sensorvorrichtung zu übertragen.

Die nötige Rechenleistung kann wiederum außerhalb der Sensorvorrichtung, insbesondere in der übergeordneten Recheneinheit, erfolgen. Allerdings ist es, wie vorab vielfach beschrieben, auch möglich, die Rechenleistung in der Sensorvorrichtung selbst zu erbringen.

Das Senden der Nachricht kann wiederum durch die Sensorvorrichtung selbst, also durch die Sende- und/oder Empfangseinheit, erfolgen. Dabei kann die Nachricht direkt an den Empfänger oder indirekt über die Recheneinheit und/oder Erfassungseinheit gesendet werden. Erfindungsgemäß wird die Nachricht bis zu einem Benutzergerät gesendet. Die Nachricht wird auf dem Benutzergerät ausgegeben.

Eine Änderung im Betriebszustand des Verschlusselements wird erfasst und als weitere Voraussetzung für die Ausgabe der Nachricht ist eine Änderung im Betriebszustand des Verschlusselement erfolgt. Hierdurch wird eine Informationsflut bei dem Benutzer verhindert.

Es kann sein, dass über die Sende- und/oder Empfangseinheit kabellos ein Befehl von einem Benutzer, insbesondere von einem mobilen Benutzergerät des Benutzers, empfangbar ist. Die Sensorvorrichtung ist vorzugsweise dazu ausgebildet, im Ansprechen auf solch einen Befehl den Sensor zu aktivieren und mittels des Sensors zumindest einen Betriebszustand des Verschlusselements zu ermitteln. Der derart ermittelte Betriebszustand wird auch dann als Nachricht ausgegeben, wenn keine Betriebszustandsänderung vorliegt.

Um Energie einzusparen, kann es vorzugsweise vorgesehen sein, dass zumindest zeitweise nicht regelmäßig der Betriebszustand erfasst wird, sondern bei einer Betriebszustandsänderung. Insbesondere kann die Sensorvorrichtung eine Detektionsvorrichtung zum Erkennen einer Betriebszustandsänderung umfassen. Dass eine Betriebszustandsänderung erfolgt, kann durch die Detektionsvorrichtung, beispielsweise Beschleunigungssensor oder Hallsensor, am Verschlusselement detektiert werden. Wenn solch eine Betriebszustandsänderung vorliegt, kann mittels des Sensors der neue Betriebszustand ermittelt werden. Daraufhin erfolgt dann ein Abgleich mit der Vorgabe, insbesondere mit der ersten Vorgabe, und, insbesondere gleichzeitig, auch ein Abgleich der Zusatzinformation mit der Vorgabe, insbesondere mit der zweiten Vorgabe. Wenn beide Werte der Vorgabe bzw. den Vorgaben entsprechen, wird die Nachricht versendet.

Wie bereits beschrieben, kann der Betriebszustand an die übergeordnete Recheneinheit gesendet werden. Die Recheneinheit kann dann den Vergleich des Betriebszustandes mit der Vorgabe machen. Gleichzeitig kann die Recheneinheit auch die Zusatzinformation mit dem Vorgabewert vergleichen. Diese erfolgt vorzugsweise ohne, dass die Recheneinheit die Zusatzinformation an die Sensorvorrichtung sendet. So entscheidet die Recheneinheit unabhängig über das Versenden der Nachricht.

Die Recheneinheit erfasst insbesondere die Zusatzinformation ohne Kommunikation mit der Sensorvorrichtung. Vielmehr erfasst die Recheneinheit z. B. mittels des Benutzergeräts und/oder Informationen des Internets und/oder durch in der Recheneinheit hinterlegte Information die Zusatzinformation. Die Sensorvorrichtung hat keine Kenntnis von der Zusatzinformation. Somit besitzt die Recheneinheit, jedoch nicht die Sensorvorrichtung, die Informationen, um über das Versenden der Nachricht zu entscheiden. Damit die Recheneinheit Kenntnis von dem Betriebszustand des Verschlusselements erhält, sendet die Sensorvorrichtung den Betriebszustand an die Recheneinheit.

Im Folgenden wird die Funktionsweise der Sensorvorrichtung am Beispiel einer Tür und einem Sensor mit Spulen beschrieben. Allerdings ergibt sich selbige Funktionsweise bei der Anwendung an einem Fenster oder sonstigem Verschlusselemente. WO 2016/149723 A1 beschreibt einen Sensor und dessen Verwendung. Der gemäß vorliegender Erfindung verwendete Sensor kann gleich oder ähnlich ausgestaltet sein. Entsprechend kann insbesondere die Ansteuerung der Spule(n) aus WO 2016/149723 A1 auch für vorliegende Erfindung genutzt werden.

Wie bereits in WO 2016/149723 A1 beschrieben, wurde festgestellt, dass sich elektrische Messwerte an der zumindest einen Spule sowohl durch den Zustand des Riegelelements (in WO 2016/149723 A1 als Verriegelungselement bezeichnet) als auch in geringem Ausmaß durch den Türzustand ändern. Allein durch die elektrische Messung mittels des Sensors kann somit auf den Zustand des Riegelelements und auch auf den Türzustand geschlossen werden, ohne dass zusätzliche Taster oder Veränderungen am Riegelelement notwendig wären. Da die Spulenachse so angeordnet wird, dass die zumindest eine Spule vom Riegelelement durchdrungen werden kann, ist es möglich, mittels der Spule zu erfassen, ob sich nun das Riegelelement durch die Spule hindurch erstreckt oder nicht. Hierzu ist das Riegelelement selbstverständlich zumindest teilweise aus Metall. Die Impedanz ändert sich bei geschlossener Tür im Vergleich zu geöffneter Tür aufgrund der Nähe des teilweise metallenen zweiten Verschlusselementteils. Bei Anordnung der Sensorvorrichtung am Türblatt, insbesondere am Stulp, kann mittels des Sensors erfasst werden, ob sich der zumindest teilweise metallene Türrahmen, insbesondere das metallene Schließblech, in der Nähe der Spule befindet und somit die Tür geschlossen ist oder nicht. Bei Anordnung der Sensorvorrichtung am Türrahmen, insbesondere am Schließblech, kann mittels der Spule erfasst werden, ob das zumindest teilweise metallene Türblatt, insbesondere der metallene Stulp bzw. das metallene Schloss, sich in der Nähe der Spule befindet und somit die Tür geschlossen ist oder nicht.

Wenn eine möglichst geringe Bauhöhe durch die Spule(n) erreicht werden soll, ist es zweckmäßig, die Elektronik (Messvorrichtung in WO 2016/149723 A1) so auszubilden, dass sie zur Messung der Impedanz der Spule geeignet ist, während diese mit einem Wechselspannungssignal oder einem Wechselstromsignal beaufschlagt wird. Dabei kann der Sensor mit nur einer Spule ausgestattet werden, wodurch sich eine möglichst geringe Dicke der Sensorvorrichtung ergibt. Die Impedanz der Spule verändert sich, wenn das Riegelelement ein- bzw. ausgefahren wird und in geringem Ausmaß, wenn der teilweise metallene zweite Verschlusselementteil (durch Schließen der Türe) in den Bereich der Spule kommt. Die Impedanz der Spule kann mit vorgegebenen Werten verglichen werden.

Die Zuverlässigkeit der Bestimmung des Zustandes des Riegelelements und des Türblatts kann deutlich erhöht werden, indem mittels der Elektrik an die Spule nacheinander Signale unterschiedlicher Frequenz angelegt werden. Die Impedanz wird dann bei diesen unterschiedlichen Frequenzen bestimmt und diese mit vorgegebenen Werten verglichen. Wenn z. B. bei drei Frequenzen gemessen wird und von jeder Messung auf den Zustand des Riegelelements und ggf. auf den Türzustand geschlossen wird, kann bei unterschiedlichen Ergebnissen eine Mehrheitsentscheidung gefällt werden. Andererseits ist es auch oft möglich, dass zwei Zustände bei einer bestimmten Frequenz sehr ähnliche Messwerte liefern und somit kaum unterschieden werden können, sodass allein aus diesem Grund eine Messung bei verschiedenen Frequenzen angezeigt ist.

Wenn bei mehreren Frequenzen gemessen wird, erhöht sich folglich der Stromverbrauch, verglichen mit einer einzigen Messung. So kann es zweckmäßig sein, den Sensor mit zumindest zwei Spulen auszustatten. Die zumindest zwei Spulen sind dabei koaxial zueinander. Dabei handelt es sich um eine Sendespule und eine Empfangsspule. Die Sendespule wird mit Wechselstrom beaufschlagt. In der Empfangsspule wird die dabei induzierte Spannung erfasst. Die induzierte Spannung in der Empfangsspule ändert sich deutlicher als die Impedanz, insbesondere bei Änderung des Türzustandes. Auf diese Weise können Messungen bei verschiedenen Frequenzen vermieden werden, wodurch der Stromverbrauch minimiert werden kann.

Die Zuverlässigkeit kann noch weiter gesteigert werden, wenn eine weitere Empfangsspule vorgesehen ist, sodass an beiden Seiten zumindest einen Sendespule jeweils eine Empfangsspule angeordnet ist. Mittels der Elektronik wird die Differenz der in den beiden Empfangsspulen induzierten Spannung erfasst, während die zumindest eine Sendespule mit Wechselstrom beaufschlagt ist.

Folglich ist bevorzugt vorgesehen, dass der Sensor zumindest drei Spulen oder vier Spulen umfasst. Bei der bevorzugten Ausgestaltung des Sensors mit zumindest drei Spulen werden die zumindest drei Spulen übereinander angeordnet. Die Spulen können koaxial zueinander angeordnet sein. Die Sendespule(n) befindet(n) sich dabei, insbesondere symmetrisch, zwischen den beiden Empfangsspulen. Wenn sich nun ein Eisenkern (das Riegelelement) genau symmetrisch in dieser Anordnung befindet, wird in den beiden Empfangsspulen genau die gleiche Spannung induziert, die Differenzspannung zwischen den beiden Empfangsspulen ist daher 0. Wenn sich aber der Eisenkern in die eine oder andere Richtung verschiebt, wird die Anordnung asymmetrisch und es ergibt sich eine induzierte Differenzspannung an den beiden Empfangsspulen. Ebenso verändert sich die induzierte Differenzspannung bei geschlossener Tür im Verhältnis zu einer geöffneten Tür durch die Nähe des zweiten zumindest teilweise metallenen Verschlusselementteils. Es ist möglich, eine Sendespule zwischen den Empfangsspulen anzuordnen. Des Weiteren ist es auch möglich, zumindest zwei Sendespulen zwischen den beiden Empfangsspulen anzuordnen. Dabei sind die beiden Sendespulen insbesondere Teil eines gemeinsamen Stromkreises und/oder senden ein gemeinsames Signal. Ebenso können die beiden Empfangsspulen Teil eines gemeinsamen Stromkreises sein. Daher kann auch von einer Sendespule mit zwei Wicklungsbereichen und einer Empfangsspule mit zwei Wicklungsbereichen gesprochen werden.

Der Sensor kann, unabhängig von der Anzahl der Spulen, die Türzustände offen und geschlossen sowie die Riegelelementzustände Riegel-Eingefahren und Riegel-Ausgefahren erfassen. Somit kann die Sensorvorrichtung mittels des Sensors die Betriebszustände Geöffnet-Riegel-Ausgefahren, Geöffnet-Riegel-Eingefahren, Geschlossen-Riegel-Ausgefahren und Geschlossen-Riegel-Eingefahren detektieren. Dabei erfolgt mit der Elektronik zumindest das Bestromen der Spule und oder das untermittelbare Erfassen der Impedanz bzw. induzierten Spannung. Die weiteren Auswertungen, beispielsweise der Vergleich mit hinterlegten Werten kann ebenfalls in der Elektronik, insbesondere in der Steuereinheit, oder in der übergeordneten Recheneinheit erfolgen.

Bevorzugt kann das Sensorsystem, insbesondere die Sensorvorrichtung, den Betriebszustand "Sensor außerhalb der Betriebsposition" detektieren. In dem Betriebszustand "Sensor außerhalb der Betriebsposition" befindet sich der Sensor außerhalb der Betriebsposition, wobei die Sensorvorrichtung in der Betriebsposition an dem ersten Verschlusselementteil befestigt ist. Insbesondere wird der Betriebszustand "Sensor außerhalb der Betriebsposition" durch Sensorwerte bestimmt, die einen Abstand zu dem ersten, zumindest teilweise metallenen Verschlusselementteil charakterisieren, wobei der Abstand größer ist als in der Betriebsposition.

Die Sensorvorrichtung umfasst Befestigungsmittel zur Befestigung an dem ersten Verschlusselementteil. Das Befestigungsmittel kann insbesondere als das Klebeelement ausgebildet sein. Umfasst der Sensor zumindest eine Sendespule zwischen zwei Empfangsspulen, so wird in der Empfangsspule, die zu dem Befestigungsmittel gewandt ist, bei einem Abstand zu dem ersten Verschlusselementteil, der größer ist als in der Betriebsposition, eine andere, insbesondere geringere, Spannung induziert, als in der Betriebsposition. Insbesondere ändert sich damit auch die Differenzspannung zwischen den beiden Empfangsspulen. Hierdurch lässt die der Betriebszustand "Sensor außerhalb der Betriebsposition" bestimmen.

Somit kann das Sensorsystem, insbesondere die Sensorvorrichtung, mittels des Sensors neben den Betriebszustände Geöffnet-Riegel-Ausgefahren, Geöffnet-Riegel-Eingefahren, Geschlossen-Riegel-Ausgefahren und Geschlossen-Riegel-Eingefahren einen weiteren Betriebszustand, nämlich den Betriebszustand "Sensor außerhalb der Betriebsposition" detektieren.

Bevorzugt ist vorgesehen, dass stets bei der Detektion des Betriebszustand "Sensor außerhalb der Betriebsposition" eine Nachricht versendet wird.

Anstelle des in dem Türspalt als Spulen ausgebildeten Sensors sind andere Sensoren denkbar. Insbesondere kann es sein, dass das Sensorsystem einen, insbesondere ersten, Sensor umfasst, um zu detektieren, ob das Türblatt oder das Fensterblatt geöffnet oder geschlossen ist. Das Sensorsystem kann einen, insbesondere zweiten, Sensor umfassen, um zu detektieren, ob das Riegelelement eingefahren oder ausgefahren ist.

Der Sensor, der ausgebildet ist zu detektieren, ob das Türblatt oder das Fensterblatt geöffnet oder geschlossen ist, kann z. B. als Hallsensor oder als Reedschalter ausgebildet sein. Hierbei ist auf dem zweiten Verschlusselementteil ein Magnet angeordnet und auf dem ersten Verschlusselementteil der Hallsensor oder der Reedschalter. Alternativ kann der Sensor, der ausgebildet ist zu detektieren, ob das Türblatt oder das Fensterblatt geöffnet oder geschlossen ist, als Lichtschranke ausgebildet sein. Beispielsweise kann die Lichtschranke als Reflexionslichtschranke ausgebildet sein. Das zweite Verschlusselementteil kann im geschlossenen Zustand das Licht der Lichtschranke reflektieren, während im geöffneten Zustand eine Reflexion des Lichts an dem zweiten Verschlusselementteil unterbleibt. Alternativ kann der Sensor, der ausgebildet ist zu detektieren, ob das Türblatt oder das Fensterblatt geöffnet oder geschlossen ist, als Schalter, insbesondere ein Mikroschalterm ausgebildet sein. Beispielsweise ragt in den Türspalt ein Betätigungselement, mit dem der Schalter, betätigt werden kann. Das Betätigungselement kann noch einen weiteren Zweck erfüllen und z. B. als Falle eines Einsteckschlosses dienen.

Der Sensor, der ausgebildet ist zu detektieren, ob das Riegelelement eingefahren oder ausgefahren ist, kann z. B. als Hallsensor oder als Reedschalter ausgebildet sein. Hierbei ist z. B. an dem Riegelelement ein Magnet angeordnet, der mit dem Hallsensor oder Reedschalter zusammenwirkt. Alternativ kann der Sensor, der ausgebildet ist zu detektieren, ob das Riegelelement eingefahren oder ausgefahren ist, als Lichtschranke ausgebildet sein. Beispielsweise kann die Lichtschranke als Reflexionslichtschranke oder Transmissionslichtschranke ausgebildet sein. Das Licht kann in einem der Riegelelementzustände, z. B. im ausgefahrenen Zustand, an dem Riegel reflektiert werden, in dem anderen Riegelelementzustand, z. B. im eingefahrenen Zustand, hingegen nicht. Alternativ kann der Sensor, der ausgebildet ist zu detektieren, ob das Riegelelement eingefahren oder ausgefahren ist, als Schalter, insbesondere als Mikroschalter, ausgebildet sein. In einem der Riegelelementzustände, z. B. im ausgefahrenen Zustand, kann der Schalter betätigt sein, während in dem anderen Riegelelementzustand, z. B. im eingefahrenen Zustand, der Schalter unbetätigt ist. Alternativ kann eine Kontaktfolie verwendet werden. An der Kontaktfolie wird durch die Berührung des Riegelelements ein elektrisches Signal erzeugt. In einem Riegelelementzustand, z. B. im ausgefahrenen Zustand, wird auf der Kontaktfolie durch das Riegelelement ein Signal erzeugt, während in dem anderen Riegelelementzustand, z. B. im eingefahrenen Zustand, das Riegelelement kein Signal auf der Kontaktfolie erzeugt. Alternativ kann der Sensor, der ausgebildet ist zu detektieren, ob das Riegelelement eingefahren oder ausgefahren ist, als Beschleunigungssensor ausgebildet sein. Hierbei ist der Beschleunigungssensor mit dem Riegelelement verbunden. Hierbei muss zunächst eingestellt werden, in welchem Zustand sich das Riegelelement initial befindet. Danach lässt bei jeder Riegelelementbewegung durch den Beschleunigungssensor und aus der Historie erkennen, ob sich der Riegel in den eingefahrenen oder ausgefahrenen Zustand bewegt.

Es kann sein, dass der erste Sensor und/oder der zweite Sensor an dem Tür- oder Fensterrahmen angeordnet sind. Alternativ können der erste Sensor und/oder der zweite Sensor an oder in dem Türblatt angeordnet sein. Beispielsweise können der erste Sensor und/oder der zweite Sensor in einem Einsteckschloss angeordnet sein. Bevorzugt sind sowohl der erste Sensor und der zweite Sensor gemeinsam an einem Verschlusselementteil, also dem Verschlusselementrahmen oder dem Verschlusselementblatt, angeordnet. Die Sende- und/oder Empfangseinheit kann, insbesondere in diesen Fällen, kabelgebunden mit der Recheneinheit kommunizieren. Beispielsweise kann die Sende- und/oder Empfangseinheit als Busschnittstelle ausgebildet sein.

Die Vorgabe, insbesondere die erste Vorgabe, kann bestimmte Betriebszustände umfassen. Beispielsweise umfasst die erste Vorgabe, dass eine Nachricht auszugeben ist, wenn das Verschlusselement geöffnet ist und/oder wenn das Riegelelement eingefahren ist. Z. B. kann die Vorgabe, insbesondere als erste Vorgabe, das Vorliegen des Betriebszustand Geöffnet-Riegel-Ausgefahren, Geöffnet-Riegel-Eingefahren oder Geschlossen-Riegel-Eingefahren umfassen. Die Vorgabe umfasst hingegen nicht das Vorliegen des Betriebszustands Geschlossen-Riegel-Eingefahren. D. h. ist das Verschlusselement geschlossen und das Riegelelement ausgefahren, wird keine Nachricht ausgegeben.

Erfindungsgemäß ist vorgesehen, dass die Zusatzinformation eine Information über zumindest einen Benutzer ist. Dabei können auch Informationen von mehreren Benutzern eine gemeinsame Zusatzinformation darstellen. Darüber hinaus ist es auch möglich, von mehreren Benutzern jeweils zumindest eine Information einzusammeln und daraus mehrere Zusatzinformationen zu bilden. Daraufhin werden vorzugsweise die mehreren Zusatzinformationen mit jeweils einer Vorgabe verglichen. Wenn die mehreren Zusatzinformationen der Vorgabe entsprechen und insbesondere gleichzeitig der Betriebszustand der Vorgabe entspricht, wird die Nachricht ausgegeben.

Die Information über den Benutzer ist in einer ersten Alternative der Erfindung eine Ortsinformation über den Benutzer, insbesondere über sein Benutzergerät. Dabei handelt es sich um eine Ortsinformation, z.B. basierend auf Satellitennavigationsdaten und/oder GSM-Ortung des Benutzergerätes. Beispielsweise ist als Vorgabe, insbesondere als zweite Vorgabe, definiert, dass das Benutzergerät einen definierten Abstand zum Verschlusselement und/oder zur Sensorvorrichtung überschreiten muss. Somit wird nur eine Nachricht ausgegeben, wenn die Zusatzinformation vorliegt, dass das Benutzergerät den Abstand überschreitet. Ein Benutzer, der sich in der Nähe des Verschlusselements befindet und den Betriebszustand durch Blickkontakt ermitteln kann, wird somit von einer unnötigen Nachricht entlastet. Die Vorgabe kann zusätzlich oder alternativ lauten, dass sich das Benutzergerät außerhalb des räumlichen Bereichs, dass das Verschlusselement verschließt, aufhält.

Die Ausgabe der Nachricht erfordert somit eine Entfernung des Benutzers vom Verschlusselement.

Zusätzlich oder alternativ kann als Vorgabe, insbesondere als zweite Vorgabe, definiert sein, dass das Benutzergerät einen definierten Abstand zum Verschlusselement und/oder zur Sensorvorrichtung unterschreiten muss. Der Benutzer muss sich somit in der Nähe aufhalten, damit der Benutzer auf die Nachricht reagieren kann.

Eine Ortsinformation kann aus einem Kalendereintrag eines digitalen Kalenders eines Benutzers gezogen werden. Hierzu kann das Sensorsystem Zugang zu dem digitalen Kalender haben und/oder der digitale Kalender ist in dem Sensorsystem hinterlegt. Basierend auf diesen Kalendereinträgen kann die Information gezogen werden, wo sich der Benutzer befindet. Beispielsweise der Kalendereintrag "Besprechung in New York" ließe den Schluss zu, dass dem Benutzer keine Nachricht über ein Verschlusselement an einer Tür in Hamburg anzuzeigen wäre. Z. B. kann der Benutzer die Nachricht nicht wünschen, da der Benutzer nicht reagieren kann. Andererseits ist es denkbar, bei dem Kalendereintrag "Besprechung in New York" eine Nachricht zu versenden. Der entsprechende Benutzer ist somit außer Haus und möchte benachrichtigt werden, ob sich der Zustand des Verschlusselements ändert. Die Zusatzinformation ist somit "Aufenthalt in New York" und die Vorgabe, insbesondere die zweite Vorgabe ist, bei einem Aufenthalt größer einem definierten Abstand von dem Verschlusselement und/oder der Sensorvorrichtung die Nachricht auszugeben bzw. nicht auszugeben.

In einer zweiten Alternative der Erfindung ist vorgesehen, dass die Information über den Benutzer einem Zeitprofil oder einer Zeitinformation, insbesondere aus einem digitalen Kalender des Benutzers entspricht. Beispielsweise kann der Benutzer in dem Sensorsystem hinterlegen, nach welchem Zeitprofil er die Nachricht erhalten möchte oder nicht. Dadurch wird die Nachricht an den entsprechenden Benutzer nur versendet, wenn er dies zu der gegebenen Zeit auch wünscht. Darüber hinaus ist es möglich, die Zeitinformation des Benutzers aus einem digitalen Kalender des Benutzers zu ziehen. Der digitale Kalender, z. B. Outlook^{®}, kann an dem Benutzergerät eingegeben werden. Das Benutzergerät kann den digitalen Kalender an die Recheneinheit weiterleiten. Sowohl durch das Zeitprofil als auch durch den digitalen Kalender wird zumindest ein Zeitraum bestimmt. Die Vorgabe, insbesondere die zweite Vorgabe kann lauten, dass die aktuelle Zeit sich innerhalb des Zeitraums befindet. Die Zusatzinformation besteht darin, den Zeitraum zu kennen und des Weiteren zu prüfen, ob die aktuelle Zeit sich innerhalb des Zeitraums befindet.

Es kann sein, dass sowohl die Ortsinformation und der Zeitraum als Zusatzinformation verwendet werden. Hierbei sind "und" oder "oder" Verknüpfungen denkbar. So kann der Recheneinheit sowohl die Information über den Aufenthaltsort des Benutzergeräts als auch der Zeitraum einer Abwesenheit des Benutzers vorliegen. Die Nachricht wird versendet, wenn z. B. entweder das Benutzergerät von dem räumlichen Bereich, den das Verschlusselement verschließt, entfernt ist, oder ein Zeitraum einer Abwesenheit des Benutzers vorliegt.

Darüber hinaus ist bevorzugt vorgesehen, dass das Verfahren folgende Schritte umfasst: Zunächst erfolgt ein Erfassen von mehreren Zusatzinformationen, wobei zumindest von zwei unterschiedlichen Benutzern jeweils eine Information als Zusatzinformation erfasst wird. Daraus erfolgt ein Ausgeben der Nachricht nur, wenn zumindest der ermittelte Betriebszustand des Verschlusselements einer Vorgabe entspricht und gleichzeitig die zumindest zwei erfassten Zusatzinformationen der zumindest zwei Benutzer jeweils einer entsprechenden Vorgabe entsprechen.

Auch bei Verwendung von Informationen über mehrere Benutzer können wieder Ortsinformationen und/oder Zeitinformationen und/oder Informationen aus digitalen Kalendern, insbesondere Orts- und/oder Zeitinformationen, und/oder hinterlegte Zeitprofile herangezogen werden.

Beispielsweise können die Ortsinformationen und/oder die Informationen aus den digitalen Kalendern und/oder die Zeitprofile über die mehreren Benutzer angeben, dass die mehreren Benutzer in einem von dem Verschlusselement verschließbaren räumlichen Bereich abwesend sind. Dabei ist es möglich, dass, insbesondere ausschließlich, die Ortsinformationen, z.B. Ortsinformationen von Benutzergeräten der mehreren Benutzer, als Zusatzinformation verwendet werden. Es ist möglich, dass insbesondere ausschließlich Zeitinformationen, insbesondere Zeitinformationen aus digitalen Kalendern, als Zusatzinformation verwendet werden. Ferner ist es möglich, dass eine Kombination als Ort- und Zeitinformationen als Zusatzinformation verwendet wird.

Hierzu können Bestimmungsverfahren, z. B. das Überschreiten eines Abstands, wie zuvor für einen Benutzer beschrieben, verwendet werden. Die Benutzer, insbesondere die Benutzergeräte, die zum Generieren der Zusatzinformation herangezogen werden, können in dem Sensorsystem hinterlegt sein. Die Abwesenheit der mehreren hinterlegten Benutzer ist die Zusatzinformation, die benötigt wird, um die Nachricht auszugeben. Dieses kann z. B. an einem Überschreiten des definierten Abstands der hinterlegten Benutzergeräte zu der Sensorvorrichtung und/oder dem Verschlusselement festgestellt werden. Ist ein hinterlegter Benutzer hingegen zu Hause, unterbleibt das Aussenden der Nachricht. Dieses kann z. B. an einem Unterschreiten des definierten Abstands des Benutzergeräts zu der Sensorvorrichtung und/oder dem Verschlusselement festgestellt werden. Anwesenheit von anderen, nicht hinterlegten Personen oder Benutzergeräten verhindert hingegen nicht die Ausgabe der Nachricht. Beispielsweise sind die Benutzergeräte von mehreren Benutzern, z. B. Familienmitgliedern, in dem Sensorsystem hinterlegt. Sind die hinterlegten Benutzer außer Haus und erfolgt eine Änderung des Betriebszustands, so wird die Nachricht ausgegeben, auch wenn ein Benutzergerät, z. B. das Benutzergerät eines Postboten, sich innerhalb des räumlichen Bereichs befindet.

Ebenfalls ist es denkbar, dass die Ausgabe einer Nachricht erfolgt, obwohl zumindest ein erstes der hinterlegten Benutzergeräte zu Hause ist, insbesondere zumindest ein erstes der hinterlegten Benutzergeräte den definierten Abstand zu der Sensorvorrichtung und/oder dem Verschlusselement unterschreitet. Hierbei ist es denkbar, dass das Sensorsystem zuvor Kenntnis davon erlangt hat, dass das erste Benutzergerät nicht zur Erzeugung der Zusatzinformation zu verwenden ist. Bevorzugt kann ein weiteres hinterlegtes Benutzergerät das Sensorsystem in Kenntnis setzen. So kann z. B. ein Benutzer, z. B. ein Familienmitglied sein Benutzergerät zu Hause vergessen, und ein anderer Benutzer kann mittels seines hinterlegten Benutzergeräts dennoch die Ausgabe der Nachricht ermöglichen, indem das vergessene Benutzergerät bzgl. des Sensorsystems "deaktiviert" wird.

Es können die Benutzer, deren digitalen Kalender zur Bestimmung der Zusatzinformation herangezogen werden sollen, in dem Sensorsystem hinterlegt sein. Das Sensorsystem erhält die Zeitinformationen der digitalen Kalender der hinterlegten Benutzer. Beispielsweise kann nur wenn bei allen digitalen Kalendern der hinterlegten Benutzer ein Kalendereintrag vorliegt, wird die Nachricht ausgegeben.

Erfindungsgemäß ist vorgesehen, dass die Nachricht auf einem insbesondere mobilen Benutzergerät, insbesondere Mobiltelefon, ausgegeben wird.

Insbesondere ist es möglich, einen Benutzer oder mehrere Benutzer zu identifizieren, die die Nachricht erhalten soll(en) und zumindest einen anderen Benutzer von dem Erhalt der Nachricht auszuschließen. Die Vorgabe könnte beispielsweise lauten, dass der entsprechende Benutzer sich in einer maximalen Entfernung, z. B. in einem Umkreis von 10 Kilometern, um das Verschlusselement befinden muss. Die Vorgabe könnte zusätzlich oder alternativ lauten, dass das Benutzergerät näher als die weiteren Benutzergeräte an der Sensorvorrichtung befindet. Somit wird vorzugsweise dasjenige Benutzergerät von mehreren Benutzern gewählt, das der Sensorvorrichtung am nächsten ist. Dadurch steigt die Wahrscheinlichkeit, dass derjenige Benutzer die Nachricht erhält, der auf die Nachricht auch entsprechend reagieren kann, beispielsweise die Türe schließen kann oder den nicht genutzten Raum anderweitig für ein Meeting nutzen kann.

Wenn dieser Vorgabewert erfüllt ist, erhält der Benutzer die entsprechende Nachricht. Eine andere Vorgabe wäre, dass der Benutzer den Empfang der Nachricht nicht ausgeschlossen hat, beispielsweise durch das hinterlegte Zeitprofil. So können Benutzer identifiziert werden, denen die Nachricht zuzustellen ist und Benutzer, denen die Nachricht nicht zuzustellen ist.

Des Weiteren ist bevorzugt vorgesehen, dass die Nachricht auf zumindest einem weiteren Benutzergerät ausgegeben wird, wenn sich innerhalb einer vorbestimmten Zeitspanne der Betriebszustand des Verschlusselements nicht ändert und/oder dem Sensorsystem innerhalb der vorbestimmten Zeitspanne ein Nachrichteneingang fehlt, der anzeigen würde, dass der zumindest eine Benutzer, der die Nachricht erhielt, die Nachricht zur Kenntnis genommen hat.

Es kann sein, dass eine Nachricht ausgegeben wird, wenn als Betriebszustand ein Riegel-Eingefahren-Zustand vorliegt und die Informationen, insbesondere die Ortsinformationen, über die mehreren Benutzer angeben, dass die mehreren Benutzer, insbesondere alle Benutzer, über die dem Sensorsystem eine Information vorliegen soll, abwesend sind. Die Abwesenheit kann durch einen Abstand der Benutzergeräte zum Verschlusselement und/oder zur Sensorvorrichtung oder der Abwesenheit in dem räumlichen Bereich ergeben.

Hierdurch wird stets ausgegeben, wenn bei Abwesenheit der Bewohner das Verschlusselement unverschlossen zurückgelassen wurde.

Besonders bevorzugt ist vorgesehen, dass, wenn als Betriebszustand ein Riegel-Eingefahren-Zustand vorliegt, insbesondere der Geöffnet-Riegel-Eingefahren-Zustand oder der Geschlossen-Riegel-Eingefahren-Zustand, und gleichzeitig erfasst wird, insbesondere aufgrund der Ortsinformationen, dass sämtliche oder insbesondere sämtliche hinterlegten Benutzer abwesend sind, zumindest ein Benutzer eine entsprechende Nachricht erhält. So erhält beispielsweise derjenige, der als Letztes das Haus verlässt, eine entsprechende Nachricht am Benutzergerät, dass er der Letzte ist und die Tür abschließen sollte, also den Riegel ausfahren sollte.

Des Weiteren ist bevorzugt vorgesehen, dass, wenn als Betriebszustand ein Geöffnet-Zustand, unabhängig von der Riegelstellung, vorliegt und die Ortsinformation mehrerer, insbesondere aller Benutzer angibt, dass die Benutzer abwesend sind, eine Nachricht ausgegeben wird. Die Abwesenheit kann durch einen Abstand der Benutzergeräte zum Verschlusselement und/oder zur Sensorvorrichtung oder der Abwesenheit in dem räumlichen Bereich festgestellt werden. Dadurch kann zumindest ein Benutzer darüber informiert werden, dass kein Benutzer mehr in der Nähe des offenstehenden Verschlusselements anwesend ist.

Die aufgezeigten Beispiele betreffen natürlich auch den Fall, in dem nur ein Benutzer berücksichtigt wird. Auch dieser eine Benutzer sollte darüber informiert werden, dass der Riegel nicht ausgefahren ist oder das Verschlusselement sogar offen steht, wenn erfasst wird, dass er abwesend ist.

Zusätzlich oder alternativ dazu, dass die Zusatzinformation eine Information über den Benutzer darstellt, ist bevorzugt vorgesehen, dass die Zusatzinformation einer Information über einen Raum entspricht. Dieser Raum wird insbesondere mit dem Verschlusselement verschlossen. Wie bereits erwähnt, kann das Senden der Nachricht auch davon abhängig gemacht werden, dass mehrere Zusatzinformationen entsprechenden Vorgaben entsprechen. So kann beispielsweise die Nachricht auch nur dann gesendet werden, wenn sowohl eine Zusatzinformation über den Raum als auch eine Zusatzinformation über zumindest einen Benutzer der entsprechenden Vorgabe entspricht.

Beispielsweise kann die Information über den Raum einer Geschäftszeit oder Geschäftszeiten entsprechen. Dieses ist insbesondere vorgesehen, wenn der Raum einem Geschäftsraum entspricht. Es ist denkbar, dass die Geschäftszeit oder die Geschäftszeiten nicht explizit als Zeitprofil in das Sensorsystem einzugeben sind, sondern dass das Sensorsystem die bereits anderweitig hinterlegte Information über die Geschäftszeit oder die Geschäftszeiten erhält. Z. B. kann die Geschäftszeit in auf einer Internetseite des Geschäfts, in einer Einbruchmeldeanlage oder in einem digitalen Kalender des Geschäfts hinterlegt sein. Es ist denkbar, dass das Sensorsystem auf die derart hinterlegte Geschäftszeit zugreifen kann. Es kann sein, dass eine Nachricht nur dann ausgegeben wird, wenn als zweite Vorgabe die aktuelle Zeit außerhalb der Geschäftszeit liegt.

Ferner umfasst ist ein Sensorsystem, vorzugsweise ausgebildet zur Durchführung des vorab beschriebenen Verfahrens. Das Sensorsystem umfasst eine Sensorvorrichtung, wie sie im Rahmen dieser Erfindung mit vielfachen optionalen

Merkmalen beschrieben ist, für die Detektion zumindest eines Betriebszustands des Verschlusselements und eine Elektronikvorrichtung, beispielsweise die übergeordnete Recheneinheit, zur Ausgabe bzw. Weiterleitung der Nachricht.

Bei der Elektronikvorrichtung kann es sich um die Elektronik der Sensorvorrichtung, um die Erfassungseinheit und/oder um die Recheneinheit handeln.

Insbesondere für die Anordnung im Verschlusselementspalt ist bevorzugt vorgesehen, dass die einzelnen Elemente (Sensor und Elektrik) nicht nur in einer Ebene, sondern auch in einer Reihe angeordnet sind. Hierzu ist eine Raumrichtung definiert. Die Raumrichtung ist durch eine Gerade vorgegeben, die quer durch die Sensorachse, insbesondere Spulenachse, verläuft. Die Raumrichtung erstreckt sich von der Sensorachse radial nach außen. Die Elektrik schließt sich entlang dieser Raumrichtung an den Sensor an. Insbesondere schneidet diese Raumrichtung die Elektrik. Am Schnittpunkt der Raumrichtung mit der Sensorachse kann eine dritte imaginäre Achse definiert werden. Diese dritte imaginäre Achse steht senkrecht zur Sensorachse und senkrecht zur Raumrichtung. Diese dritte imaginäre Achse schneidet insbesondere nicht die Elektrik.

Insbesondere weist die Sensorvorrichtung, vorzugsweise an der höchsten bzw. dicksten Stellen, eine Höhe von höchstens 2,5 mm, bevorzugt höchstens 2,3 mm, besonders bevorzugt höchstens 2,1 mm, auf. Des Weiteren ist insbesondere vorgesehen, dass die Elektrik, aus Richtung der Sensorachse, insbesondere Spulenachse, betrachtet, neben dem Sensor, insbesondere neben der Spule, angeordnet ist. So ist insbesondere vorgesehen, dass die vollständige Elektrik, aus Richtung der Sensorachse, insbesondere Spulenachse, betrachtet, neben dem Sensor, insbesondere neben der Spule, angeordnet ist. Insbesondere ist vorgesehen, dass die Sensorachse, insbesondere Spulenachse, keinen Bestandteil der Elektrik schneidet. Insbesondere ist die Elektrik somit vollständig querab der Sensorachse, insbesondere Spulenachse, angeordnet.

Die Sensorvorrichtung, insbesondere umfassend den Sensor mit Spule und die Elektrik, ist somit vorzugsweise in einer Ebene angeordnet. Dadurch ergibt sich ein sehr dünner Aufbau der gesamten Sensorvorrichtung und es ist möglich, die Sensorvorrichtung in einem Verschlusselementspalt anzuordnen.

Es ist denkbar, dass die Sende- und/oder Empfangseinheit stoffschlüssig mit einer Vorderseite und oder Rückseite der Sensorvorrichtung verbunden ist. Die Sende- und/oder Empfangseinheit kann an oder in einer Platine befestigt sein. Die Platine kann insbesondere ein Elektronikplatinenteil sein. Die Platine kann die Vorder- und/oder Rückseite der Sensorvorrichtung bilden oder stoffschlüssig mit der Vorder- und/oder Rückseite verbunden sein. Beispielsweise ist die Sende- und/oder Empfangseinheit mit der Vorderseite und der Rückseite stoffschlüssig verbunden. Hierdurch kann eine geringe Aufbauhöhe erreicht werden und dennoch die Sende- und/oder Empfangseinheit vorgesehen sein, so dass eine kabellose Kommunikation zum Aussenden der Nachricht erfolgen kann.

Die Aufgabe der Erfindung wird auch durch eine Anordnung mit einem Verschlusselement und einem erfindungsgemäßen Sensorsystem gelöst.

Die Erfindung wird nun anhand eines Ausführungsbeispiels näher beschrieben. Dabei zeigen:
- Figur 1: eine erfindungsgemäße Anordnung mit erfindungsgemäßer Sensorvorrichtung gemäß allen Varianten,
- Figuren 2 - 9: die erfindungsgemäße Sensorvorrichtung gemäß einer ersten Variante,
- Figur 10: die erfindungsgemäße Sensorvorrichtung gemäß einer zweiten Variante, und
- Figuren 11 - 14: die erfindungsgemäße Sensorvorrichtung gemäß einer dritten Variante,
- Figur 15: die erfindungsgemäße Sensorvorrichtung gemäß einer vierten Variante,
- Figur 16: ein erstes erfindungsgemäßes Verfahren,
- Figur 17: ein zweites erfindungsgemäßes Verfahren und
- Figur 18: ein nicht erfindungsgemäßes erfindungsgemäßes Verfahren.

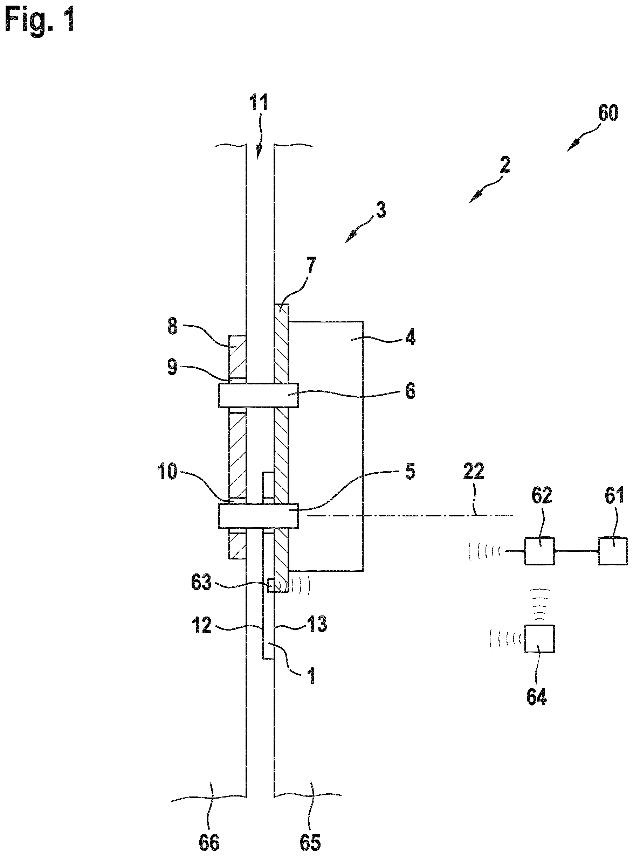

Figur 1 zeigt in rein schematischer Darstellung eine Anordnung 2. Die Anordnung 2 umfasst eine Sensorvorrichtung 1 und ein Verschlusselement 3, hier ausgebildet als Tür. Von dem Verschlusselement 3 ist lediglich ein Ausschnitt gezeigt.

Das Verschlusselement 3 umfasst ein Schloss 4 in einem Türblatt; allgemein als erstes Verschlusselementteil 65 bezeichnet. Das Schloss 4 wiederum weist einen Stulp 7 auf. In dem Schloss 4 befindet sich ein Riegelelement 5, hier ausgebildet als Riegel. Das Riegelelement 5 ist beispielsweise mit einem Schlüssel ein- und ausfahrbar. Das Riegelelement 5 ist entlang einer Spulenachse 22 verschiebbar. Diese Spulenachse 22 ist Teil der Sensorvorrichtung 1 und wird noch im Detail erläutert.

Das Schloss 4 kann ein weiteres Riegelelement 6, beispielsweise in Form einer Falle, aufweisen. Im gezeigten Ausführungsbeispiel durchdringt das Riegelelement 5 die Sensorvorrichtung 1. Allerdings kann die Sensorvorrichtung 1 auch so ausgebildet und angeordnet werden, dass das weitere Riegelelement 6 (Falle) die Sensorvorrichtung 1 durchdringt und mittels der Sensorvorrichtung 1 erfasst wird.

Dem Türblatt liegt der Rahmen, allgemein als zweites Verschlusselementteil 66 bezeichnet, der Anordnung 2 gegenüber. In diesem Rahmen befindet sich, als separates Bauteil oder integraler Bereich, das Schließblech 8. Das Schließblech 8 weist eine Fallenöffnung 9 und eine Riegelöffnung 10 auf. In diese Riegelöffnung 10 erstreckt sich das Riegelelement 5 im ausgefahrenen Zustand. Dementsprechend erstreckt sich das weitere Riegelelement 6 in die Fallenöffnung 9.

Zwischen Stulp 7 und Schließblech 8 ist im geschlossenen Zustand des Verschlusselements ein Verschlusselementspalt 11 ausgebildet. In diesem Verschlusselementspalt 11 befindet sich die Sensorvorrichtung 1. Hierbei befindet sich die Sensorvorrichtung 1 in der Betriebsposition.

Die Sensorvorrichtung 1 weist eine Vorderseite 12 und eine Rückseite 13 auf. Die Vorderseite 12 und Rückseite 13 sind insbesondere senkrecht zur Spulenachse 22 definiert. Die Rückseite 13 bildet die Montagefläche der Sensorvorrichtung 1 und ist auf einer Auflagefläche am Stulp 7 befestigt, insbesondere angeklebt. Die Sensorvorrichtung 1 und somit auch die Auflagefläche können sich über den Stulp 7 hinaus erstrecken.

Die Vorderseite 12 ist dem Verschlusselementspalt 11 zugewandt.

Figur 1 zeigt ferner ein Sensorsystem 60 umfassend die Sensorvorrichtung 1. Zusätzlich umfasst das Sensorsystem 60 auch eine übergeordnete Recheneinheit 61, eine Erfassungseinheit 62 und ein Benutzergerät 64, beispielsweise ein Mobiltelefon. Zur Verdeutlichung zeigt Figur 1 auch rein schematisch die Sende- und/oder Empfangseinheit 63 in der Sensorvorrichtung 1. Die Sende- und/oder Empfangseinheit 63 kommuniziert, insbesondere drahtlos, direkt mit der Recheneinheit 61 und/oder über die Erfassungseinheit 62 mit der Recheneinheit 61. Die Erfassungseinheit 62 befindet sich insbesondere im Kommunikationsbereich für eine drahtlose Datenübertragung mit der Sensorvorrichtung 1, beispielsweise in der Nähe der Tür. Die Erfassungseinheit 62 ist vorzugsweise kabelgebunden mit der Recheneinheit 61 zur Datenübertragung verbunden. Allerdings ist auch hier eine kabellose Übertragung möglich.

Das Benutzergerät 64 kann, insbesondere kabellos, direkt mit der Sende- und/oder Empfangseinheit 63 oder aber über die Recheneinheit 61 oder die Erfassungseinheit 62 mit der Sensorvorrichtung 1 kommunizieren.

In einer nicht dargestellten Variante ist es auch möglich, die Sensorvorrichtung 1 auf der anderen Seite, nämlich am Schließblech 8 entsprechend anzuordnen.

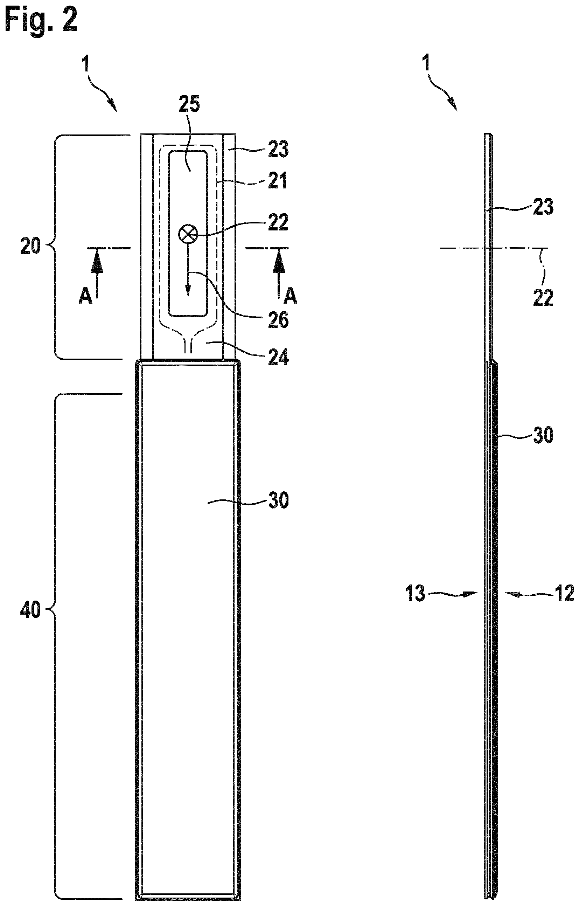

Die Figuren 2 bis 9 zeigen in unterschiedlichen Darstellungen den grundsätzlichen Aufbau der Sensorvorrichtung 1 sowie gewisse Besonderheiten der ersten Variante der Sensorvorrichtung 1.

Im Folgenden wird, soweit nicht explizit anders erwähnt, stets auf die Figuren 2 bis 9 Bezug genommen.

Die Sensorvorrichtung 1 umfasst einen Sensor 20. Der Sensor 20 wiederum weist zumindest eine Spule 21 auf, die hier nur rein schematisch dargestellt ist. Die Spule 21 definiert die Spulenachse 22. Insbesondere ist vorgesehen, dass die zumindest eine Spule 21 in oder auf einem Sensorplatinenteil 24 ausgebildet ist. Insbesondere ist die Spule 21 eine Leiterbahn im Sensorplatinenteil 24. Das Sensorplatinenteil 24 liegt auf einem Sockelelement 23. Das Sockelelement 23 ist in den ersten drei Ausführungsbeispielen insbesondere aus elektrisch nichtleitendem Material, insbesondere Kunststoff gebildet. Sowohl das Sockelelement 23 als auch die Spule 21 und das Sensorplatinenteil 24 weisen eine Durchgangsaussparung 25 auf. Durch diese Durchgangsaussparung 25 erstreckt sich die Spulenachse 22.

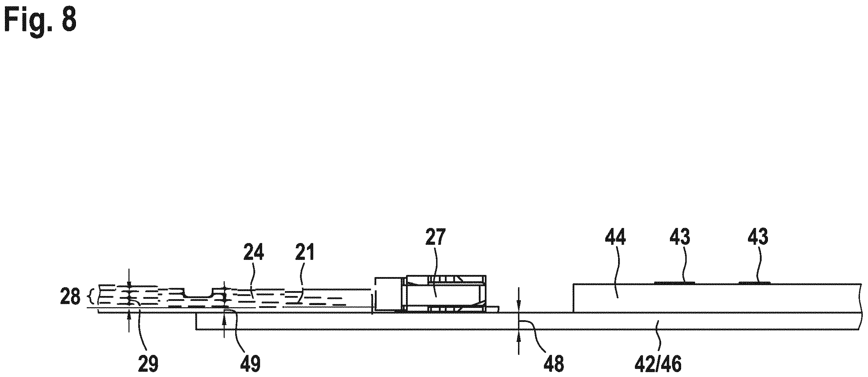

Die Sensorvorrichtung 1 ist in der Anordnung 2 insbesondere so angeordnet, dass sich das Riegelelement 5 durch diese Durchgangsaussparung 25 entlang der Spulenachse 22 erstrecken kann. Bevorzugt sind zumindest ein oder zwei Sendespule(n) und zwei Empfängerspule, die jeweils zumindest eine Wicklung, bevorzugt mehrere Wicklungen umfassen, in Richtung der Spulenachse 22 hintereinander angeordnet. Die Sendespule(n) wird/werden von den Empfängerspulen eingeschlossen. Somit ist ausgehend von der Rückseite 13 der Sensorvorrichtung 1 zunächst eine Empfängerspule, anschließend die Sendespule(n) und anschließend eine weitere Empfängerspule angeordnet. Der Aufbau mit drei Spulen 21 ist in Fig. 8 dargestellt.

In Figur 2, die eine Draufsicht auf die Vorderseite 12 darstellt, verdeckt die dargestellte Empfängerspule 21 die dahinterliegenden Sendespulen sowie die der Rückseite zugewandte weitere Empfängerspule. Durch die in den beiden Empfängerspulen induzierte Spannungsdifferenz ist es möglich, die Nähe von Metall des zweiten Verschlusselementteil 66 zu detektieren. Hierdurch kann detektiert werden, ob das Verschlusselement geöffnet oder geschlossen ist. Ferner kann durch eine Änderung der induzierten Spannung in den Empfängerspulen detektiert werden, ob das Riegelelement 5 ausgefahren oder eingefahren ist. Somit können mittels des Sensors 20 die Betriebszustände des Verschlusselements 3, nämlich ein Geöffnet-Riegel-Ausgefahren-Zustand, ein Geöffnet-Riegel-Eingefahren-Zustand, ein Geschlossen-Riegel-Ausgefahren-Zustand und ein Geschlossen-Riegel-Eingefahren-Zustand, detektiert werden. Da der Metallanteil der Verschlusselementeteile 65, 66 und des Riegelelements 5 variieren können, werden bei der Inbetriebnahme der Sensorvorrichtung 1 die genannten Betriebszustände Sensorwerten, insbesondere Amplitudenänderungen und/oder Phasenverschiebungen der in den Empfängerspulen induzierten Spannungen oder Spannungsdifferenzen, zugeordnet. Somit wird bei der Inbetriebnahme die Sensorvorrichtung kalibriert.

Die Sensorvorrichtung 1 kann einen weiteren Betriebszustand detektieren, nämlich den Betriebszustand "Sensor außerhalb der Betriebsposition". Hierbei handelt es sich um einen Zustand, bei dem der Sensor 20 oder die gesamte Sensorvorrichtung 1 von dem ersten Verschlusselemententeil 65 entfernt wurde. Hierbei ändert sich insbesondere die induzierte Spannung, die in der Empfängerspule, die dem ersten Verschlusselemententeil 65 zugewandt ist, induziert wird.

Die Sensorvorrichtung weist eine Höhe in Richtung der Spulenachse 22 von höchstens 2,5 mm, bevorzugt höchstens 2,3 mm, besonders bevorzugt höchstens 2,1 mm auf.

Dadurch, dass die Sensorvorrichtung 1 auf dem Verschlusselementblatt 65 befestigt wird, benötigt die Sensorvorrichtung 1 eine eigenständige Energieversorgung in Form von Energiespeichern 45. Zur besseren Nachrüstbarkeit ist eine kabelgebundene Verbindung mit einer externen Energieversorgung nicht vorgesehen. Um Energie zu sparen und/oder um den Benutzer von unnötigen Informationen zu entlasten, ist erfindungsgemäß vorgesehen, dass die Sensorvorrichtung den Betriebszustand des Verschlusselements ermittelt. Hierbei können der Geöffnet-Riegel-Ausgefahren-Zustand, der Geöffnet-Riegel-Eingefahren-Zustand, der Geschlossen-Riegel-Ausgefahren-Zustand, der Geschlossen-Riegel-Eingefahren-Zustand und der Sensor-außerhalb-Betriebsposition-Zustand ermittelt werden.

Ferner liegt der Recheneinheit 61 eine Zusatzinformation vor. Entspricht der Betriebszustand einer ersten Vorgabe und entspricht die Zusatzinformation einer zweiten Vorgabe, so wird eine Nachricht ausgegeben. Das Überprüfen, ob die Zusatzinformation der zweiten Vorgabe und der Betriebszustand der ersten Vorgabe entspricht, wird von der Recheneinheit 61 vorgenommen. Ergibt die Überprüfung, dass die Vorgaben erfüllt sind, so erstellt die Recheneinheit 61 die Nachricht. Die Recheneinheit 61 versendet die Nachricht an das mobile Benutzergerät 64, beispielsweise über eine Telekommunikationsnetzwerk oder das Internet. Die Nachricht wird auf dem Display des Benutzergeräts 64 angezeigt. Zudem kann ein durch das Benutzergerät 64 akustisches Signal den Eingang der Nachricht anzeigen.

Bei der ersten Vorgabe kann es sich um das Vorliegen eines vorgegebenen Betriebszustands, insbesondere um den Geöffnet-Riegel-Ausgefahren-Zustand, den Geöffnet-Riegel-Eingefahren-Zustand, den Geschlossen-Riegel-Ausgefahren-Zustand, den Geschlossen-Riegel-Eingefahren-Zustand und den Sensor-außerhalb-Betriebsposition-Zustand, handeln.

Zusätzlich wird eine Nachricht verschickt, wenn sich der Betriebszustand geändert hat.

Beispielsweise kann es sich bei der Zusatzinformation um eine Ortsinformation des Benutzergeräts 64 handeln. Die Ortsinformation wird z. B. über GSM Ortung ermittelt. Es kann sich bei der Zusatzinformation auch um einen Kalendereintrag in einen digitalen Kalender des Benutzers handeln, auf den die Recheneinheit 61 Zugriff hat.

Beispielsweise stellt die Recheneinheit 61 als Zusatzinformation fest, dass sich das Benutzergerät 64 außerhalb des räumlichen Bereichs, das durch das Verschlusselement 3 verschließbar ist, befindet. Ebenfalls übermittelt die Sensorvorrichtung den ermittelten Betriebszustand, z. B. den Geschlossen-Riegel-Eingefahren-Zustand, an die Recheneinheit 61.

Ist in der Recheneinheit 61 hinterlegt, dass, wenn sich das Benutzergerät 64 außerhalb des räumlichen Bereichs befindet und wenn der ermittelte Betriebszustand dem Geschlossen-Riegel-Eingefahren-Zustand, eine Nachricht auszugeben ist, so wird die Recheneinheit 61 die Nachricht ausgeben. Die zweite Vorgabe entspricht dabei der Vorgabe "Benutzergerät 64 außerhalb des räumlichen Bereichs". Die erste Vorgabe entspricht dabei dem "Vorliegen des Geschlossen-Riegel-Eingefahren-Zustand". Die erste Vorgabe kann auch mehrere Betriebszustände umfassen. Beispielsweise kann die erste Vorgabe besagen, dass einer der Betriebszuständen "Geöffnet-Riegel-Ausgefahren-Zustand", "Geöffnet-Riegel-Eingefahren-Zustand", "Geschlossen-Riegel-Eingefahren-Zustand" "Sensor-außerhalb der Betriebsposition-Zustand" vorliegen soll.

Es kann auch vorgesehen sein, dass mehrere Zusatzinformationen Vorgaben entsprechen müssen, damit eine Nachricht ausgegeben wird. Beispielsweise muss sowohl eine Ortsinformation des Benutzergeräts 64 als auch ein Kalendereintrag desselben Benutzers vorliegen. Zusätzlich oder alternativ müssen als Zusatzinformationen Vorgaben zu verschiedenen in der Recheneinheit 61 hinterlegten Benutzern erfüllt sein, damit eine Nachricht ausgegeben wird. Beispielsweise müssen die Benutzergeräte von allen hinterlegten Benutzern sich außerhalb des räumlichen Bereichs befinden, damit die Nachricht ausgegeben wird. In einem anderen Beispiel muss von jedem Benutzer entweder ein Kalendereintrag vorliegen oder es muss sich das Benutzergerät 64 außerhalb des räumlichen Bereichs befinden, damit eine Nachricht ausgegeben wird.

In einem weiteren Ausführungsbeispiel entspricht die Zusatzinformation einer Information über den räumlichen Bereich, insbesondere den Raum, den das Verschlusselement 3 verschließt. So wird in einem digitalen Kalender eine Raumreservation für den Raum hinterlegt. Die Recheneinheit 61 hat Kenntnis von der in dem digitalen Kalender hinterlegten Raumreservierung. In einem in der Recheneinheit hinterlegten Zeitintervall um den Beginn der Raumreservierung wird der Betriebszustand wiederholend oder bei einer durch einen Beschleunigungssensor 53 festgestellten Bewegung des Verschlusselements 3 ermittelt. Beginnt die Raumreservierung z. B. um 10.00 Uhr, so wird innerhalb von 9.50 Uhr bis 10.10 Uhr der Betriebszustand ermittelt. Ändert sich der Betriebszustand innerhalb des Zeitintervalls, wurde z. B. innerhalb des Zeitintervalls das Verschlusselement 3 zumindest einmal geöffnet, so wird davon ausgegangen, dass der Raum wie vorgesehen genutzt wird. Ebenfalls kann davon ausgegangen werden, dass der Raum wie vorgesehen genutzt wird, wenn das Riegelelement innerhalb des Zeitintervalls eingefahren wurde. Wird hingegen das Verschlusselement 3 innerhalb des Zeitintervalls nicht geöffnet oder ist das Riegelelement am Ende des Zeitintervalls ausgefahren, so erkennt die Recheneinheit 61, dass der Raum nicht wie vorgesehen genutzt wird. In diesem Fall gibt die Recheneinheit eine Nachricht aus, woraufhin der digitale Kalender korrigiert wird. Der digitale Kalender kann von dem Benutzergerät 64 eingesehen werden. Zusätzlich oder alternativ kann eine Nachricht an z. B. eine Reinigungskraft ausgegeben werden, dass der Raum ungenutzt geblieben ist.

Die Recheneinheit 61 kann von der geographischen Lage des Orts Kenntnis haben. Mittels eines Rechenalgorithmus oder mittels des Internets ermittelt die Recheneinheit 61 den Zeitpunkt des Sonnenauf- oder untergangs und veranlasst die Sensorvorrichtung 2 an diesem Zeitpunkt den Betriebszustand zu ermitteln.

In dem Ausführungsbeispiel der Figuren 2 bis 9 weisen sowohl das Sockelelement 23 als auch die Spule 21 und das Sensorplatinenteil 24 eine Durchgangsaussparung 25 auf. Durch diese Durchgangsaussparung 25 erstreckt sich die Spulenachse 22.

Die Sensorvorrichtung 1 ist in der Anordnung 2 insbesondere so angeordnet, dass sich das Riegelelement 5 durch diese Durchgangsaussparung 25 entlang der Spulenachse 22 erstrecken kann.

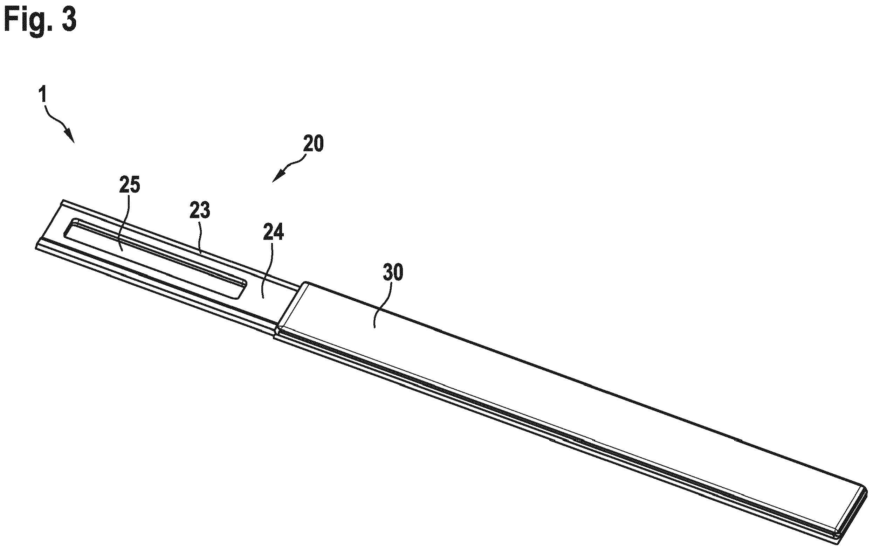

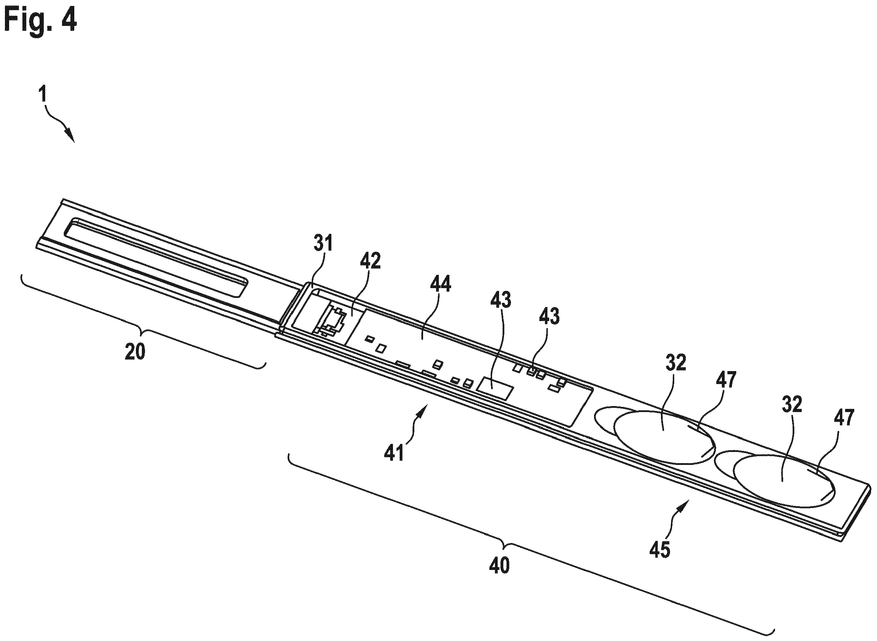

Neben dem Sensor 20 umfasst die Sensorvorrichtung 1 eine Elektrik 40. Diese Elektrik 40 ist mit einem Deckel 30 verschlossen. Figuren 2 und 3 zeigen diesen Deckel 30. In Figur 4 ist der Deckel 30 ausgeblendet.

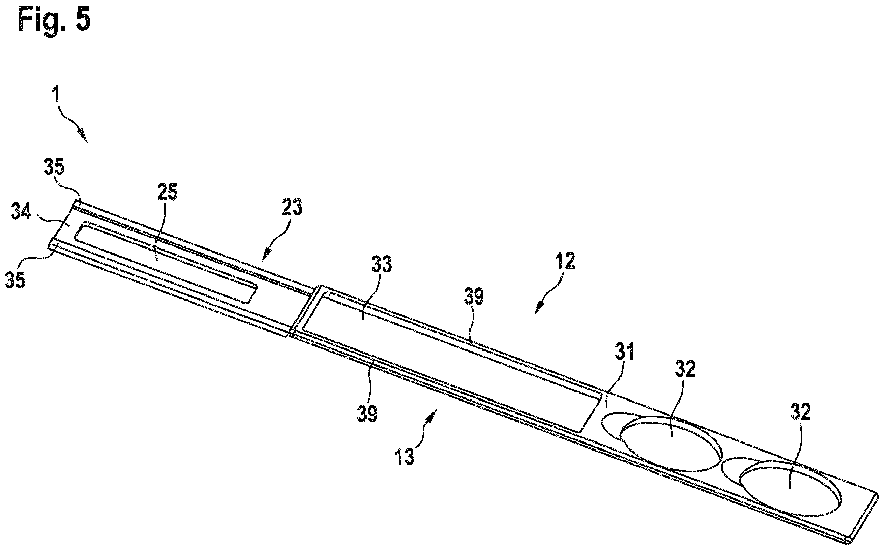

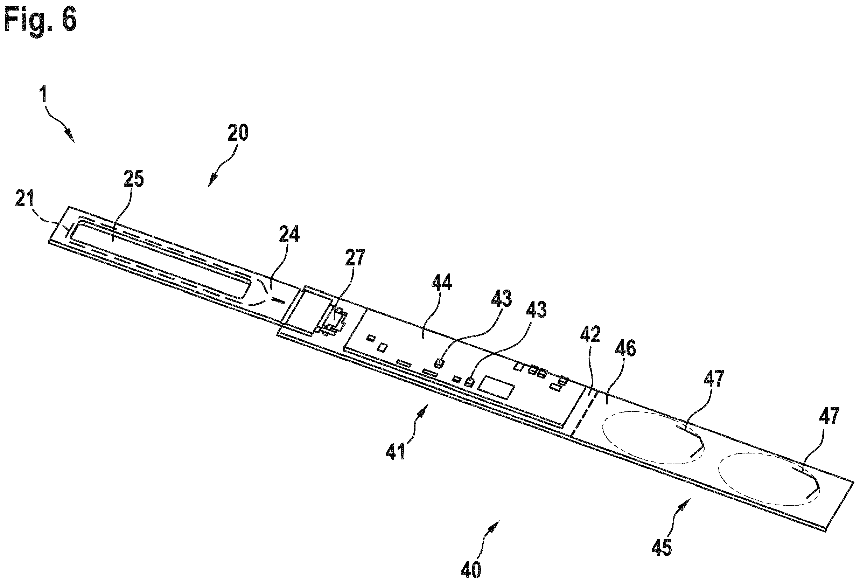

Die Sensorvorrichtung 1 umfasst ein Halteelement 31, insbesondere aus Kunststoff. Insbesondere bilden das Halteelement 31 und das Sockelelement 23 ein einstückiges Bauteil. Figur 5 zeigt das Halteelement 31 in Alleinstellung. In Figur 6 sind der Deckel 30 und das Halteelement 31 ausgeblendet.

Wie insbesondere die Figuren 4 und 6 zeigen, umfasst die Elektrik 40 eine Elektronik 41 und zwei Energiespeicher 45. Die Energiespeicher 45 sind hier als Knopfbatterien ausgebildet.

Die Elektronik 41 setzt sich zusammen aus mehreren Elektronikbauteilen 43, die auf einem Elektronikplatinenteil 42 angeordnet sind. Die Elektronikbauteile 43 befinden sich in einer Vergussmasse 44.

Das Elektronikplatinenteil 42 ist einteilig mit einem Speicherplatinenteil 46 ausgestaltet. Lediglich der Übersichtlichkeit halber ist in Figur 6 eine gestrichelte, imaginäre Grenze zwischen Elektronikplatinenteil 42 und Speicherplatinenteil 46 eingezeichnet.

Auf dem Speicherplatinenteil 46 befinden sich für die beiden Energiespeicher 45 Energiespeicherkontakte 47. Wie beispielsweise Figur 4 zeigt, sind im

Halteelement 31 zwei Energiespeicheraufnahmen 32 ausgebildet. Die beiden Energiespeicheraufnahmen 32 sind Durchgangsaussparungen im Halteelement 31. In diese Energiespeicheraufnahmen 32 können die beiden Energiespeicher 45 eingesetzt werden und können dabei durch die Energiespeicherkontakte 47 kontaktiert werden.

Des Weiteren bildet das Haltelement eine Elektronikaussparung 33, ebenfalls ausgebildet als Durchgangsaussparung, umgeben von Seitenwänden 39. In diese Elektronikaussparung 33 ragt die Elektronik 41, insbesondere die Vergussmasse 44 mit den Elektronikbauteilen 43.

Die elektrisch leitende Verbindung zwischen Elektronikplatinenteil 42 und Sensorplatinenteil 24 erfolgt hier über eine Steckverbindung 27. Diese Steckverbindung 27 erstreckt sich ebenfalls in die Elektronikaussparung 33 des Halteelements 31.

Wie beispielsweise Figur 2 zeigt, ist die gesamte Elektrik 40 auf einer Seite des Sensors 20 angeordnet. Figur 2 zeigt hierzu eine Raumrichtung 26, die senkrecht zur Spulenachse 22 definiert ist und die Spulenachse 22 schneidet. Entlang dieser Raumrichtung 26 sind die Elektronik 41 und die Energiespeicher 45 angeordnet. Die Elektronik 41 befindet sich dabei zwischen den Energiespeichern 45 und dem Sensor 20.

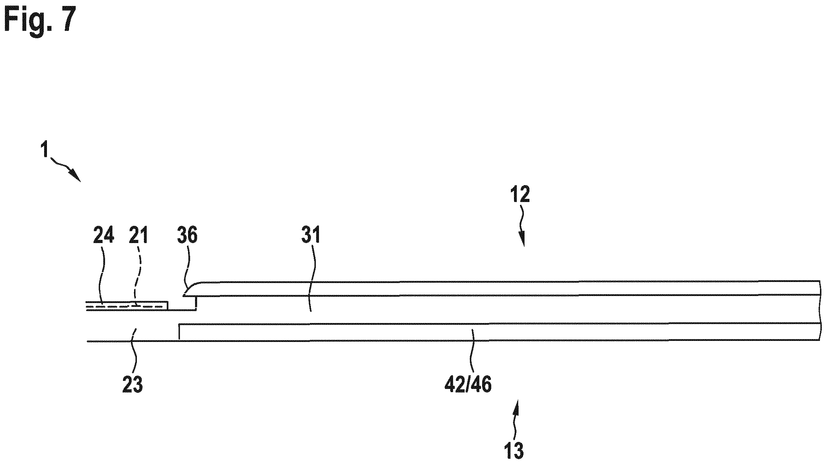

Figur 7 zeigt im Detail den Bereich zwischen Sensor 20 und Elektrik 40. Der Deckel 30 ist dabei ausgeblendet. Hierbei ist gut zu sehen, dass das Halteelement 31 an der Vorderseite 12 eine Halteelementkrempe 36 aufweist. Diese Halteelementkrempe 36 umgibt die Elektrik 40, insbesondere die Elektronikaussparung 33 und die Energiespeicheraufnahmen 32. Auf die Haltelementkrempe 36 kann der Deckel 30, insbesondere in einer elastischen Ausgestaltung, beispielsweise aus Silikon, aufgesteckt werden. Die Ränder des Deckels 30 umgreifen im aufgesteckten Zustand die Halteelementkrempe 36.

Der Deckel 30 und der Sensorplatinenteil 34 bilden somit die Außenseite und somit auch das Gehäuse der Sensorvorrichtung 1 auf der Vorderseite 12.

Die Rückseite 13, somit die Montagefläche und das rückseitige Gehäuse der Sensorvorrichtung 1 ist durch das Sockelelement 23 und die Außenseite des Elektronikplatinenteils 42 und Speicherplatinenteils 46 gebildet.

Figur 8 zeigt dieselbe Darstellung wie Figur 7, jedoch ohne Halteelement 31. Die beiden Figuren 7 und 8 verdeutlichen den Versatz zwischen Elektronikplatinenteil 42 und Spule(n) 21. In Figur 8 sind beispielhaft drei Spulen 21 eingezeichnet. In der gezeigten Variante sind alle Spulen (21) nicht nur versetzt, sondern weisen sogar einen Abstand 49 zum Elektronikplatinenteil 42 auf.

Figur 8 zeigt ferner einen Spulenbereich 28, in dem sich die drei Spulen 21 befinden. Dieser Spulenbereich 28 ist insbesondere Bestandteil des Sensorplatinenteils 24. Der Spulenbereich 28 erstreckt sich vom oberen Ende der obersten Spule 21 bis zum untersten Ende der untersten Spule 21. Der Spulenbereich 28 weist parallel zur Spulenachse 22 eine erste Höhe 29 auf. Das Elektronikplatinenteil 42 erstreckt sich parallel zur Spulenachse 22 über eine zweite Höhe 48. Diese zweite Höhe 48 ist bevorzugt kleiner als die erste Höhe 29.

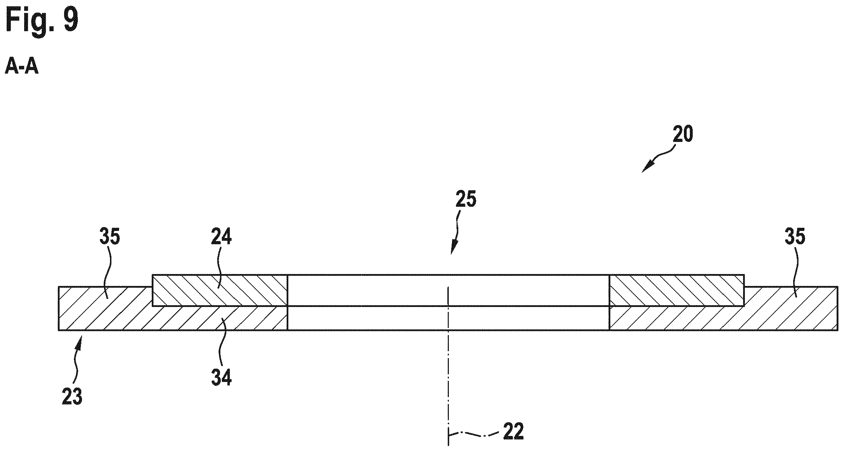

Figur 9 verdeutlicht den in Figur 2 gekennzeichneten Schnitt A:A. An dieser Darstellung ist der genaue Aufbau des Sockelelements 23 gut zu erkennen. Das Sockelelement 23 umfasst demgemäß die Sockelplatte 34 zur Aufnahme des Sensorplatinenteils 24. Seitlich des Sensorplatinenteils 24 sind zwei Seitenschienen 35 des Sockelelements 23 zur formschlüssigen Aufnahme des Sensorplatinenteils 34 angeordnet.

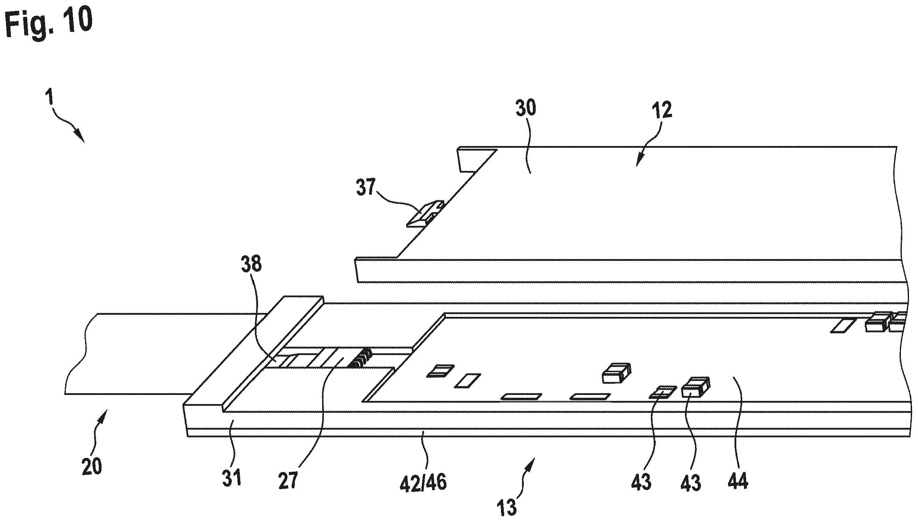

Figur 10 zeigt eine Variante der Sensorvorrichtung 1. Der grundsätzliche Aufbau der Sensorvorrichtung 1 ist hier wie in den Figuren 2 bis 9 beschrieben. Lediglich der Deckel 30 und seine Verbindung mit dem Halteelement 31 ist hier anders ausgestaltet. Der Deckel gemäß Figur 10 wird senkrecht zur Spulenachse 22 entgegen der Raumrichtung 26 auf das Halteelement 31 aufgeschoben. Der Deckel 30 weist eine Rastzunge 37 auf. Im Halteelement 31 ist eine Zungenaufnahme 38 ausgebildet. Im geschlossenen Zustand rastet die Rastzunge 37 in die Zungenaufnahme 38 ein.

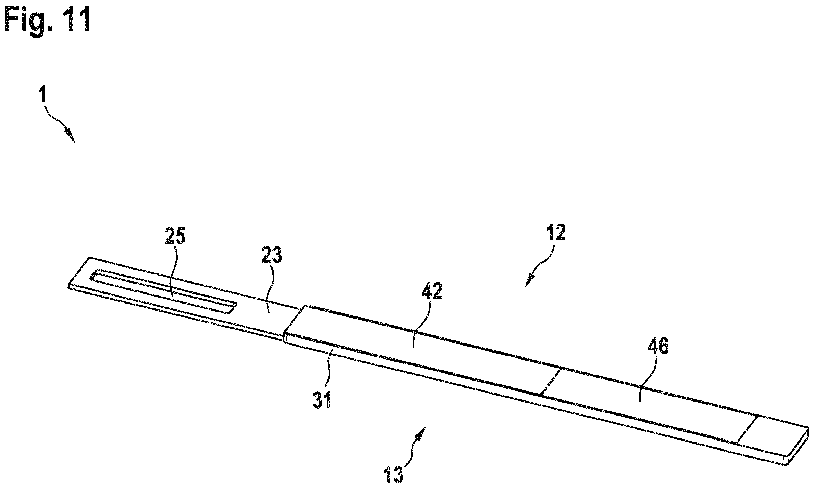

Die Figuren 11 bis 14 zeigen eine Variante der Sensorvorrichtung 1, bei der nicht die Rückseite 13 durch die Außenseiten des Elektronikplatinenteils 42 und Speicherplatinenteils 46, sondern die Vorderseite 12 durch diese Elemente gebildet wird. Demgemäß fungieren hier die beiden Platinenteile 42, 46 auch als Deckel und bilden insofern einen Teil des Gehäuses.

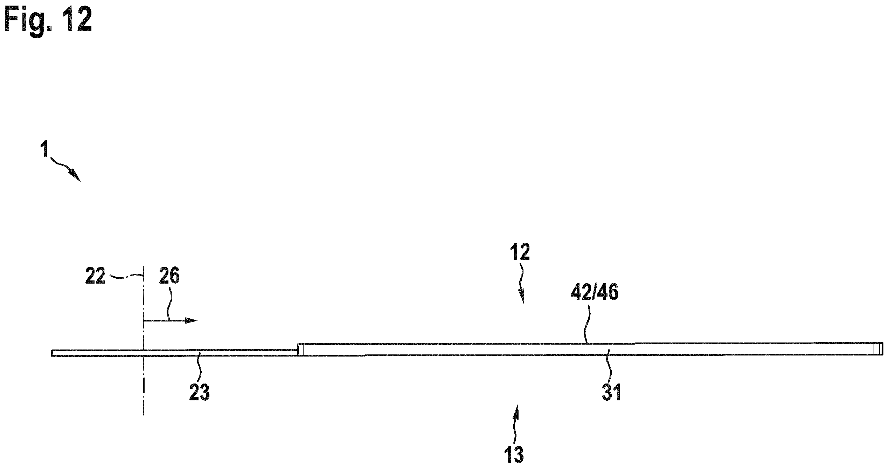

Figuren 11 und 12 zeigen die geschlossene Sensorvorrichtung 1. Das Sensorplatinenteil 24 ist hier wie in den vorhergehenden Varianten ausgestaltet, der Übersichtlichkeit halber jedoch nicht gezeigt.

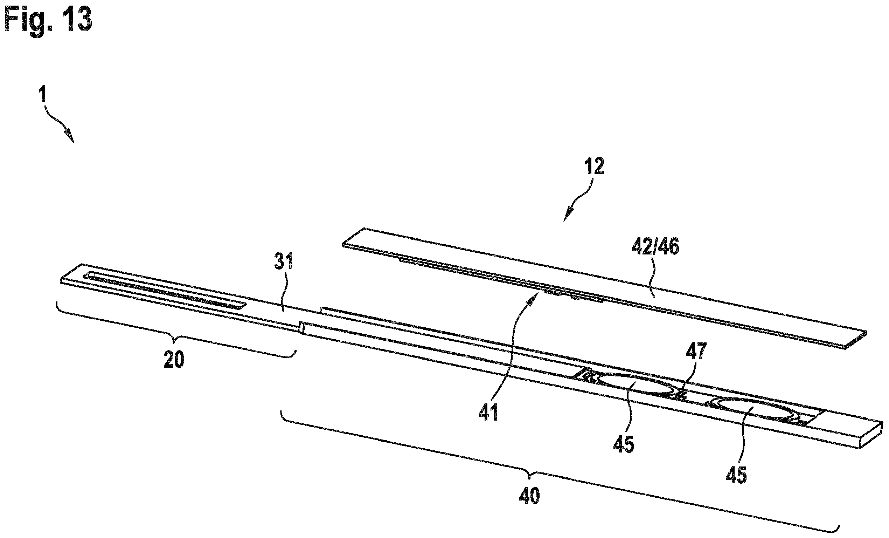

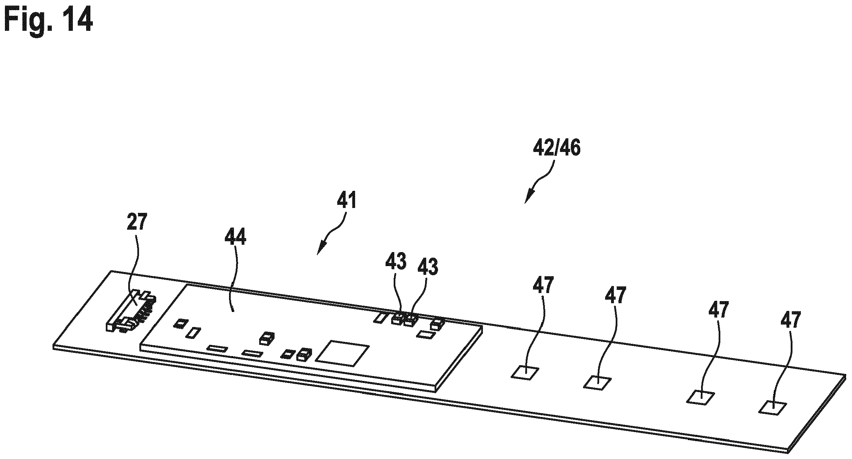

Figur 13 zeigt eine Explosionsdarstellung. Figur 14 zeigt lediglich die Innenseite des Elektronikplatinenteils 42 und Speicherplatinenteils 46, auch hier in einer einstückigen Ausgestaltung.

In der Variante gemäß den Figuren 11 bis 14 bildet die Außenseite des Haltelements 31 das Gehäuse auf der Rückseite 13 der Sensorvorrichtung. Auch hier ist das Haltelement 31 einstückig mit dem Sockelelement 32 ausgebildet.

An der Vorderseite 12 wird das Haltelement 31 durch das Elektronikplatinenteil 42 und das Speicherplatinenteils 46 verschlossen. Die außenliegende Seite dieser Platinenteile 42, 46 bildet somit das Gehäuse der Sensorvorrichtung auf der Vorderseite 12.

Die beiden Energiespeicher 45 werden hier in das Haltelement 31 eingesetzt. Wie insbesondere Figur 14 zeigt, befinden sich auf dem Speicherplatinenteil 46 entsprechende Energiespeicherkontakte 47. Diese Energiespeicherkontakte 47 können im zusammengebauten Zustand der Sensorvorrichtung 1 die Energiespeicher 45 direkt oder indirekt kontaktieren. Für die indirekte Kontaktierung befinden sich im Haltelement 31 ebenfalls Energiespeicherkontakte 47, die den elektrisch leitenden Kontakt zwischen Speicherplatinenteil 46 und Energiespeicher 45 herstellen.

Wie Figur 14 ebenfalls zeigt, befindet sich die Elektronik 41 mit Elektronikbauteilen 43 und Vergussmasse 44 auf der Innenseite des Elektronikplatinenteils 42.

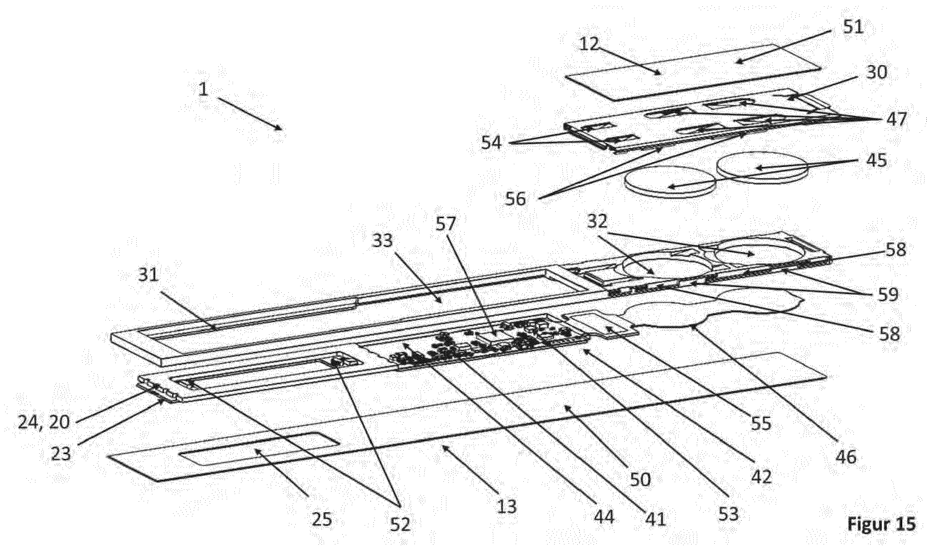

Figur 15 zeigt ein viertes Ausführungsbeispiel einer erfindungsgemäßen Sensorvorrichtung 1 in einer Explosionsdarstellung. Hierbei werden im Folgenden insbesondere die Gemeinsamkeiten und die Unterschiede zu dem ersten Ausführungsbeispiel der Figuren 2-9 erläutert.

Die Sensorvorrichtung 1 umfasst ein Klebeelement 50, das wie in dem ersten Ausführungsbeispiel die Rückseite 13 der Sensorvorrichtung 1 bildet. Eine Platine ist einstückig und stoffschlüssig mit dem Klebeelement 50 verbunden. Hierbei ist die Platine an dem Klebeelement 50 angeklebt.

Die Platine umfasst das Speicherplatinenteil 46 und das Elektronikplatinenteil 42. Das Speicherplatinenteil 46 und das Elektronikplatinenteil 42 sind somit einstückig und materialeinheitlich ausgebildet. Ferner ist eine Sockelplatte 23 einstückig und materialeinheitlich mit dem Elektronikplatinenteil 42 und dem Speicherplatinenteil 46 ausgebildet. Auf der Sockelplatte 23 ist das Sensorplatinenteil 24 angeordnet. Das Sensorplatinenteil 24 ist stoffschlüssig mit der Sockelplatte 23 verbunden, insbesondere angelötet. Das Sensorplatinenteil 24 enthält die Spulen 21, wobei zumindest ein oder zwei Sendespule(n) 21 zwischen zwei Empfangsspulen 21 innerhalb des Sensorplatinenteils 24 angeordnet sind. Hierbei sind die Empfangs- und Sendespulen 21 mit derselben oder parallelen Spulenachsen 22 ausgebildet.

Die Spulen 21 sind elektrisch und stoffschlüssig mit der Sockelplatte 23 verbunden, insbesondere angelötet. Über die Sockelplatte 23 sind die Spulen 21 mit der Elektrik 40, d. h der Elektronik 41 und den Energiespeichern 45, verbunden. Zugleich beanstandet die Sockelplatte 23 die Spulen 21 von der Rückseite 13 der Sensorvorrichtung 1. Die Sockelplatte ist als Teil der Platine ausgebildet.

Eine Lichtschranke 52 ist innerhalb des Sensorplatinenteils 24 angeordnet. Mittels der Lichtschranke 52 kann die Stellung des Riegelelements 5 zusätzlich zu den als Spulen 21 ausgebildeten Sensors 20 detektiert werden. Es ist aber auch denkbar, dass vierte Ausführungsbeispiel ohne Lichtschranke 52 auszugestalten und die Betriebszustände nur mittels des Sensors 20 zu detektieren.

Das Halteelement 31 ist auf dem Klebelement 50 befestigt.

Das Halteelement 31 ist als ein Kunststoffrahmen ausgebildet. Das Halteelement 31 bildet die Elektronikaussparung 33 als Durchgangsöffnung aus, die als Wanne für die Vergussmasse 44 dient. Zudem umrahmt die Elektronikaussparung 33 auch den Sensor 20.

Das Halteelement 31 bildet die Energiespeicheraufnahme 32 als Durchgangsöffnung aus. Innerhalb der Energiespeicheraufnahme 32 sind die Energiespeicher 45 angeordnet. Auf dem Speicherplatinenteil 46 sind erste elektrische Kontakte für einen ersten Pol der Energiespeicher 45 ausgebildet. Elektrische Leitungselemente führen in oder auf dem Speicherplatinenteil 46 zu der Elektronik. An dem zweiten Pol der Energiespeicher 45 liegen Energiespeicherkontakte 47 an.

Anders als in dem Ausführungsbeispiel der Figuren 2-9, sind die Energiespeicherkontakte 47 als elastische Zungen eines Deckels 30 ausgebildet. Der Deckel 30 ist elektrisch leitend, insbesondere metallisch. Der Deckel 30 umfasst Kontaktzungen 54, so dass der elektrische Strom von dem zweiten Pol der Energiespeicher 45 über die Energiespeicherkontakte 47 zu den Kontaktzungen 54 fließen kann. Die Kontaktzungen 54 liegen federnd und elektrisch kontaktierend an einem Kontaktfeld 55 des Speicherplatinenteils 46 an. Von dem Kontaktfeld führen elektrische Leitungselemente in oder auf dem Speicherplatinenteil 46 zu der Elektronik.

Das Klebeelement 50, die Platine 42, 46 und das Halteelement 31 bilden zusammen ein rückseitiges Gehäuseteil.

Dadurch, dass die Energiespeicherkontakte 47 und die Kontaktzungen 54 federnd ausgebildet sind und unter mechanischer Spannung an dem Energiespeicher 45 bzw. an dem Kontaktfeld 55 anliegen, ist der Stromfluss gewährleistet. Zudem drücken die Energiespeicherkontakte 47 die Energiespeicher 45 an die elektrische Kontakte für den ersten Pol, so dass auch hier der Stromfluss gewährleistet ist.

Zur elektrischen Isolierung des Deckels 30 ist der Deckel 30 mit einer nicht leitenden Folie 51 stoffschlüssig verbunden, insbesondere beklebt. Die Folie 51 bildet einen Teil der Vorderseite 12 der Sensorvorrichtung 1. Die Folie 51 und der Deckel 30 bilden zusammen ein vorderseitiges Gehäuseteil.

Des Weiteren wird die Vorderseite 12 von der Vergussmasse 44 und dem Sensorplatinenteil 24 gebildet. Es ist alternativ und nicht dargestellt möglich, die Vergussmasse 44 und eventuell das Sensorplatinenteil 24 mit der Folie 51 zu bedecken. Hierdurch ist die Sende- und/oder Empfangseinheit 63 und der Sensor 20 mit der Vorderseite 12 und der Rückseite 13 stoffschlüssig verbunden. Im Bereich der Elektronik 41 und des Sensors 20 ist die Sensorvorrichtung 1 gehäusefrei ausgebildet, d. h. Vorder- und Rückseite 12, 13 sind stoffschlüssig miteinander verbunden.

Der Deckel 30 wird an dem Halteelement 31 reversibel lösbar, insbesondere formschlüssig befestigt. Hierzu umfasst der Deckel 30 Verbindungselement 56, die durch Aussparungen 59 des Halteelements 31 geführt werden können. Danach wird durch Verschieben des Deckels 30 die Verbindungselemente 56 in Formschluss mit Vorsprüngen 58 des Halteelements 31 gebracht und damit befestigt. Die Verbindungselemente 56 und die Vorsprünge 58 sind derart ausgebildet, so dass die Energiespeicherkontakte 47 und die Kontaktzungen 54 bei geschlossenem Deckel mechanisch gespannt sind.

Bei den Ausführungsbeispielen der Figuren 2 bis 9 und 10 kann der Deckel 30 Vorsprünge aufweisen, die die Energiespeicher 45 gegen das Speicherplatinenteil drücken.

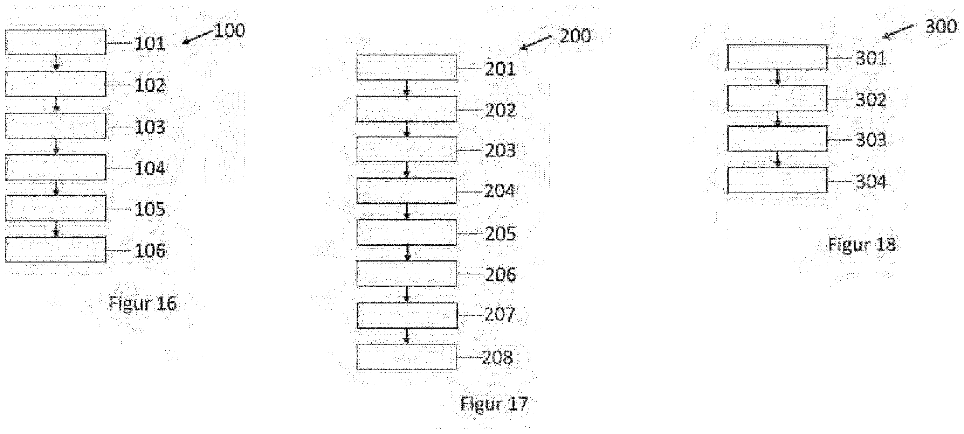

In Figur 16 ist ein erstes erfindungsgemäßes Verfahren 100 dargestellt. In einem ersten Verfahrensschritt 101 wird in der Recheneinheit 61 hinterlegt, dass die zweite Vorgabe erfüllt ist, wenn das Benutzergerät 64 eines Hausbewohners sich außerhalb eines vorgegebenen, hinterlegten Abstands zu einem als Haustür ausgebildeten Verschlusselement 3 befindet. In der Recheneinheit 61 wird in dem Verfahrensschritt 100 des Weiteren hinterlegt, dass die erste Vorgabe erfüllt ist, wenn der Betriebszustand "Geöffnet-Riegel-Ausgefahren-Zustand", "Geöffnet-Riegel-Eingefahren-Zustand", "Geschlossen-Riegel-Eingefahren-Zustand" oder "Sensor-außerhalb der Betriebsposition-Zustand" vorliegen soll. In einem zweiten Verfahrensschritt 102 detektiert der Beschleunigungssensor 53, dass die Haustür 3 bewegt wird, woraufhin die Sensorvorrichtung 2 den Betriebszustand wiederholend über einen vorgegebenen und in der Sensorvorrichtung 1 hinterlegten Zeitraum ermittelt. Somit können bei einem Öffnen und anschließenden Schließen der Haustür die Betriebszustände energiesparend ermittelt werden. Die Sensorvorrichtung 2 sendet die ermittelten Betriebszustände an die Recheneinheit 61.

In einem dritten Verfahrensschritt 103 empfängt die Recheneinheit 61 als Ortsinformation, wo sich das Benutzergerät 64 des Hausbewohners befindet.

In einem vierten Verfahrensschritt 104 vergleicht die Recheneinheit 61, ob sich das Benutzergerät 64 in dem vorgegebenen Abstand zu dem Verschlusselement 3 befindet. Befindet sich das Benutzergerät 64 außerhalb des Abstands zu dem Verschlusselement 3, so stellt die Recheneinheit 61 fest, dass die zweite Vorgabe erfüllt ist.

In einem fünften Verfahrensschritt 105 vergleicht die Recheneinheit 61 den zuletzt übermittelten Betriebszustand mit der ersten Vorgabe. Entspricht der zuletzt übermittelte Betriebszustand einem der als erste Vorgabe hinterlegten Betriebszuständen, so stellt die Recheneinheit 61 fest, dass die beiden Vorgaben erfüllt sind. In einem sechsten Verfahrensschritt 106 sendet die Recheneinheit 61 die Nachricht "Haustür ist nicht abgeschlossen" auf das Benutzergerät 64. Das Benutzergerät 64 zeigt daraufhin die Nachricht auf dem Display des Benutzergeräts 64 an.

Verlässt der Hausbewohner das Haus und vergisst die Haustür abzuschließen, so dass das Riegelelement 5 eingefahren bleibt, so sendet die Recheneinheit 61 ab einem vorgegebenen Abstand zu dem Haus die Nachricht "Haustür ist nicht abgeschlossen" auf das Benutzergerät 64.

In einer Abwandlung zu dem Verfahren wird in Schritt 101 in der Recheneinheit 61 hinterlegt, dass die zweite Vorgabe erfüllt ist, wenn von jedem Hausbewohner ein in der Recheneinheit benanntes Benutzergerät 64 sich außerhalb eines vorgegebenen, hinterlegten Abstands zu dem Verschlusselement 3 befindet. In dem dritten Verfahrensschritt 103 empfängt die Recheneinheit 61 als Ortsinformation, wo sich die hinterlegten Benutzergeräte 64 der Hausbewohner befinden. In dem vierten Verfahrensschritt 104 vergleicht die Recheneinheit 61, ob sich jedes der hinterlegten Benutzergeräte 64 zumindest in dem vorgegebenen Abstand zu dem Verschlusselement 3 befindet. Befindet sich alle hinterlegten Benutzergeräte 64 außerhalb des Abstands zu dem Verschlusselement 3, so stellt die Recheneinheit 61 fest, dass die zweite Vorgabe erfüllt ist. Der fünfte Verfahrensschritt 105 findet wie bereits beschrieben statt. In dem sechsten Verfahrensschritt 106 sendet die Recheneinheit 61 die Nachricht an jedes hinterlegte Benutzergerät 64.

In Figur 17 ist ein erfindungsgemäßes Verfahren 200, das als eine Abwandlung zu dem Verfahren 100 in Figur 16 ausgebildet ist, dargestellt. Hierbei entsprechen die Verfahrensschritte 201 bis 205 den geschilderten Verfahrensschritten 101 bis 105, wenn mehrere Benutzergeräte 64 hinterlegt sind. Abweichend von dem in Figur 16 dargestellten Verfahren 100 wird in dem Verfahren 200 in einem sechsten Verfahrensschritt 206 die Nachricht nicht an alle Benutzergeräte 64 ausgegeben, sondern nur an das Benutzergerät, das eine weitere Vorgabe erfüllt, z. B. das der Haustür 3 am nächsten ist. In einem weiteren Verfahrensschritt 207 wird eine vorgegebene Zeit lang überprüft, ob sich der Betriebszustand der Haustür in den Betriebszustand "Geschlossen-Riegel-Ausgefahren-Zustand" ändert. Ist dieses der Fall, so wird das Verfahren 200 beendet. Ist dieses nicht der Fall, so werden in einem nächsten Verfahrensschritt 208 eine Nachricht an die übrigen hinterlegten Benutzergeräte 64 ausgegeben. Hierbei lautet die Nachricht "Haustür ist nicht abgeschlossen und Benutzer XY reagiert nicht". Die Nachricht wird auf den übrigen Benutzergeräten 64 angezeigt.

In Figur 18 ist ein nicht erfindungsgemäßes Verfahren 300 dargestellt. In einem ersten Verfahrensschritt 301 wird in der Recheneinheit 61 hinterlegt, dass die zweite Vorgabe erfüllt ist, wenn in einem digitalen Kalender zu der aktuellen Zeit eine Reservation des Raumes, das das Verschlusselement 3 verschließt, hinterlegt ist. Der Raum kann ein Konferenzraum eines Bürogebäudes sein. Ferner wird als erste Vorgabe hinterlegt, dass in einem Zeitintervall zu Beginn der Raumreservierung nicht der Betriebszustand "geöffnet" eingenommen worden ist.

In einem zweiten Verfahrensschritt 302 erhält die Recheneinheit die Zusatzinformation, dass eine Raumreservierung des Raums, beginnend an einem Reservierungsbeginn, vorliegt. In einem dritten Verfahrensschritt 303 veranlasst die Recheneinheit 61, dass die Sensorvorrichtung 2 in dem Zeitintervall, das vor dem Reservierungsbeginn beginnt und nach dem Reservierungsbeginn endet, wiederholend den Betriebszustand ermittelt und der Recheneinheit 61 übermittelt.

In einem vierten Verfahrensschritt 304 überprüft die Recheneinheit am Ende des Zeitintervalls, ob der Betriebszustand "geöffnet", insbesondere der Betriebszustand "Geöffnet-Riegel-Eingefahren" oder "Geöffnet-Riegel-Ausgefahren", in dem Zeitintervall vorgelegen hat. Ist dieses nicht der Fall, so ist die erste Vorgabe erfüllt. Die Recheneinheit 61 veranlasst, dass der digitale Kalender den Raum nicht länger als reserviert anzeigt. Dieses entspricht der Ausgabe der Nachricht.

### Bezugszeichenliste

- 1: Sensorvorrichtung
- 2: Anordnung
- 3: Verschlusselement
- 4: Schloss
- 5: Riegelelement
- 6: weiteres Riegelelement
- 7: Stulp
- 8: Schließblech
- 9: Fallenöffnung
- 10: Riegelöffnung
- 11: Verschlusselementspalt
- 12: Vorderseite
- 13: Rückseite
- 20: Sensor
- 21: Spule
- 22: Spulenachse
- 23: Sockelelement
- 24: Sensorplatinenteil
- 25: Durchgangsaussparung
- 26: Raumrichtung
- 27: Steckverbindung
- 28: Spulenbereich
- 29: erste Höhe
- 30: Deckel
- 31: Halteelement
- 32: Energiespeicheraufnahme
- 33: Elektronikaussparung
- 34: Sockelplatte
- 35: Seitenschienen
- 36: Haltelementkrempe
- 37: Rastzunge
- 38: Zungenaufnahme
- 39: Seitenwände
- 40: Elektrik
- 41: Elektronik
- 42: Elektronikplatinenteil
- 43: Elektronikbauteile
- 44: Vergussmasse
- 45: Energiespeicher
- 46: Speicherplatinenteil
- 47: Energiespeicherkontakte
- 48: zweite Höhe
- 49: Abstand
- 50: Klebeelement
- 51: Folie
- 52: Lichtschranke
- 53: Beschleunigungssensor
- 54: Kontaktzungen
- 55: Kontaktfeld
- 56: Verbindungselemente
- 57: Steuereinheit
- 58: Vorsprung
- 59: Aussparung
- 60: Sensorsystem
- 61: Recheneinheit
- 62: Erfassungseinheit
- 63: Sende- und/oder Empfangseinheit
- 64: Benutzergerät
- 65: erstes Verschlusselementteil
- 66: zweites Verschlusselementteil

## Patentansprüche

1. Verfahren (100, 200, 300) zum Ausgeben einer Nachricht eines Sensorsystems (60) für ein Verschlusselement (1), insbesondere eine Tür oder ein Fenster, wobei das Verfahren mit dem Sensorsystem ausführbar ist, wobei das Sensorsystem mit einer Sensorvorrichtung (1) zur Detektion zumindest eines Betriebszustands des Verschlusselements (3), und
mit einer Elektronikvorrichtung, insbesondere einer übergeordneten Recheneinheit (61), zur Ausgabe einer Nachricht auf einem Benutzergerät ausgebildet ist,
mit den folgenden Schritten:
• Ermitteln eines vorliegenden Betriebszustands des Verschlusselements (3) mittels zumindest eines Sensors (20) der Sensorvorrichtung (1) des Sensorsystems (60),
• Erfassen einer Zusatzinformation, die von der Sensorvorrichtung (1) und/oder dem Verschlusselement (1) unabhängig ist,
• und Ausgabe einer Nachricht, wenn zumindest der ermittelte Betriebszustand des Verschlusselements (3) und die erfasste Zusatzinformation einer Vorgabe entsprechen,
**dadurch gekennzeichnet, dass** die Zusatzinformation eine Information über zumindest einen Benutzer ist, wobei die Information über den Benutzer eine Ortsinformation ist, wobei die Ortsinformation der Ortsinformation des Benutzergeräts (64), insbesondere Mobiltelefons, des Benutzers, insbesondere basierend auf Satellitennavigationsdaten und/oder GSM Ortung, entspricht.

2. Verfahren (100, 200, 300) zum Ausgeben einer Nachricht eines Sensorsystems (60) für ein Verschlusselement (1), insbesondere eine Tür oder ein Fenster, wobei das Verfahren mit dem Sensorsystem ausführbar ist, wobei das Sensorsystem mit einer Sensorvorrichtung (1) zur Detektion zumindest eines Betriebszustands des Verschlusselements (3), und
mit einer Elektronikvorrichtung, insbesondere einer übergeordneten Recheneinheit (61), zur Ausgabe einer Nachricht auf einem Benutzergerät ausgebildet ist,
mit den folgenden Schritten:
• Ermitteln eines vorliegenden Betriebszustands des Verschlusselements (3) mittels zumindest eines Sensors (20) der Sensorvorrichtung (1) des Sensorsystems (60),
• Erfassen einer Zusatzinformation, die von der Sensorvorrichtung (1) und/oder dem Verschlusselement (1) unabhängig ist,
• und Ausgabe einer Nachricht, wenn zumindest der ermittelte Betriebszustand des Verschlusselements (3) und die erfasste Zusatzinformation einer Vorgabe entsprechen,
**dadurch gekennzeichnet, dass** die Zusatzinformation eine Information über zumindest einen Benutzer ist, wobei die Information über den Benutzer einem Zeitprofil oder einer Zeitinformation aus einem digitalen Kalender des Benutzers entspricht.

3. Verfahren nach Anspruch 1 oder 2, **dadurch gekennzeichnet,**
**dass** eine Änderung im Betriebszustand des Verschlusselements (3) erfasst wird und als weitere Voraussetzung für die Ausgabe der Nachricht eine Änderung im Betriebszustand des Verschlusselements (3) erfolgt ist, insbesondere dass die Sensorvorrichtung (1) eine Detektionsvorrichtung (53) zum Erkennen einer möglichen Betriebszustandsänderung umfasst.

4. Verfahren nach einem der vorhergehenden Ansprüche, **dadurch gekennzeichnet, dass** stets eine Nachricht ausgegeben wird, wenn das Sensorsystem (60) einen Befehl zur Ermittlung des Betriebszustands empfängt und/oder wenn das Sensorsystem (60) detektiert, dass sich der Sensor (20) außerhalb einer Betriebsposition befindet.

5. Verfahren nach einem der vorhergehenden Ansprüche, **dadurch gekennzeichnet, dass** die Sensorvorrichtung (1) eine
Sende- und/oder Empfangseinheit (62), umfasst, über die der Betriebszustand des Verschlusselements (3) an eine übergeordnete Recheneinheit (61) übermittelt wird, wobei sich die Recheneinheit (61) außerhalb der Sensorvorrichtung (1) befindet und die Recheneinheit (61)über die Ausgabe der Nachricht entscheidet, wobei insbesondere die Recheneinheit (61) die Zusatzinformation ohne Kommunikation mit der Sensorvorrichtung (1) erfasst.

6. Verfahren nach einem der vorhergehenden Ansprüche, **dadurch gekennzeichnet, dass** das Verfahren folgende Schritte umfasst:
• Erfassen von mehreren Zusatzinformationen, wobei zumindest von zwei unterschiedlichen Benutzern jeweils eine Information als Zusatzinformation erfasst wird,
• und Ausgabe der Nachricht, wenn zumindest der ermittelte Betriebszustand des Verschlusselements (3) und insbesondere gleichzeitig die erfassten Zusatzinformationen der zumindest zwei Benutzer einer Vorgabe entsprechen.

7. Verfahren nach Anspruch 5, **dadurch gekennzeichnet, dass** die erfassten Informationen über die mehreren Benutzer Ortsinformationen und/oder Kalenderinformationen und/oder hinterlegten Zeitprofilen entsprechen, wobei die Ortsinformationen und/oder Informationen aus digitalen Kalendern und/oder die Zeitprofile über mehrere Benutzer angeben, dass die mehreren Benutzer in einem von dem Verschlusselement (3) verschließbaren räumlichen Bereich abwesend sind.

8. Verfahren nach einem der Ansprüche 5 oder 6, **dadurch gekennzeichnet, dass** eine Nachricht ausgegeben wird, wenn als Betriebszustand ein Riegel-Eingefahren-Zustand und/oder ein Geöffnet-Zustand vorliegt und die Informationen, insbesondere die Ortsinformationen, über die mehreren Benutzer angeben, dass die mehreren Benutzer, insbesondere alle Benutzer, über die dem Sensorsystem (60) eine Information vorliegen soll, abwesend sind.

9. Verfahren nach einem der vorhergehenden Ansprüche, **dadurch gekennzeichnet, dass** die Nachricht auf einem Benutzergerät (65), insbesondere Mobiltelefon, ausgegeben wird, wobei die Nachricht auf dem Benutzergerät (64), insbesondere Mobiltelefon, eines ersten Benutzers ausgegeben wird, wobei das Benutzergerät (64)des ersten Benutzers dasjenige der mehreren Benutzergeräte (64) ist, das sich innerhalb einer maximalen Entfernung zu der Sensorvorrichtung (1) befindet und/oder der Sensorvorrichtung (1) am nächsten ist.

10. Verfahren nach Anspruch 8, **dadurch gekennzeichnet, dass** die Nachricht auf einem weiteren Benutzergerät (64), insbesondere Mobiltelefon, ausgegeben wird, wenn sich innerhalb einer vorbestimmten Zeitspanne der Betriebszustand des Verschlusselements (3) nicht ändert und/oder dem Sensorsystem (60) innerhalb der vorbestimmten Zeitspanne ein Nachrichteingang fehlt, dass der Benutzer die Nachricht zur Kenntnis genommen hat.

11. Sensorsystem (60), vorzugsweise ausgebildet zur Durchführung eines Verfahrens nach einem der vorhergehenden Ansprüche,
mit einer Sensorvorrichtung (1) zur Detektion zumindest eines Betriebszustands eines Verschlusselements (3), und
mit einer Elektronikvorrichtung, insbesondere einer übergeordneten Recheneinheit (61), zur Ausgabe einer Nachricht
• wobei die Sensorvorrichtung (1) zum Ermitteln eines vorliegenden Betriebszustands des Verschlusselements (3) mittels zumindest eines Sensors (20) ausgebildet ist,
• das Sensorsystem (60), insbesondere die Elektronikvorrichtung, zum Erfassen einer Zusatzinformation, die von der Sensorvorrichtung (1) und/oder dem Verschlusselement (1) unabhängig ist, ausgebildet ist,
• und die Elektronikvorrichtung zur Ausgabe einer Nachricht ausgebildet ist, wenn zumindest der ermittelte Betriebszustand des Verschlusselements (3) und, insbesondere gleichzeitig, die erfasste Zusatzinformation einer Vorgabe entsprechen,
**dadurch gekennzeichnet, dass** die Zusatzinformation eine Information über zumindest einen Benutzer ist
wobei die Information über den Benutzer eine Ortsinformation ist, wobei die Ortsinformation der Ortsinformation des Benutzergeräts, des Benutzers entspricht
oder
wobei die Information über den Benutzer einem Zeitprofil oder einer Zeitinformation aus einem digitalen Kalender des Benutzers entspricht.

## Claims

1. A method (100, 200, 300) for outputting a message from a sensor system (60) for a closure element (1), in particular a door or a window, wherein the method can be carried out with the sensor system, wherein the sensor system is designed with a sensor device (1) for detecting at least one operating state of the closure element (3), and
with an electronic device, in particular a higher-level computing unit (61), for outputting a message on a user device, having the following steps:
• determining a current operating state of the closure element (3) by means of at least one sensor (20) of the sensor device (1) of the sensor system (60),
• recording additional information which is independent of the sensor device (1) and/or the closure element (1),
• and outputting a message if at least the determined operating state of the closure element (3) and the recorded additional information correspond to a specification,
**characterised in that** the additional information is information about at least one user, wherein the information about the user is location information, wherein the location information corresponds to the location information of the user device (64), in particular mobile phone, of the user, in particular based on satellite navigation data and/or GSM localisation.

2. The method (100, 200, 300) for outputting a message from a sensor system (60) for a closure element (1), in particular a door or a window, wherein the method can be carried out with the sensor system, wherein the sensor system is designed with a sensor device (1) for detecting at least one operating state of the closure element (3), and
with an electronic device, in particular a higher-level computing unit (61), for outputting a message on a user device, having the following steps:
• determining a current operating state of the closure element (3) by means of at least one sensor (20) of the sensor device (1) of the sensor system (60),
• recording additional information which is independent of the sensor device (1) and/or the closure element (1),
• and outputting a message if at least the determined operating state of the closure element (3) and the recorded additional information correspond to a specification,
**characterised in that** the additional information is information about at least one user, wherein the information about the user corresponds to a time profile or time information from a digital calendar of the user.

3. The method according to claim 1 or 2, **characterised in that** a change in the operating state of the closure element (3) is detected and, as a further prerequisite for outputting the message, a change in the operating state of the closure element (3) has occurred, in particular **in that** the sensor device (1) comprises a detection device (53) for detecting a possible change in the operating state.

4. The method according to one of the preceding claims, **characterised in that** a message is always output when the sensor system (60) receives a command to determine the operating state and/or when the sensor system (60) detects that the sensor (20) is outside an operating position.

5. The method according to one of the preceding claims, **characterised in that** the sensor device (1) comprises a transmitting and/or receiving unit (62), via which the operating state of the closure element (3) is transmitted to a higher-level computing unit (61), wherein the computing unit (61) is located outside the sensor device (1) and the computing unit (61) decides on the output of the message, wherein in particular the computing unit (61) records the additional information without communication with the sensor device (1).

6. The method according to one of the preceding claims, **characterised in that** the method comprises the following steps:
• recording a plurality of additional items of information, wherein at least two different users each record one item of information as additional information,
• and outputting the message if at least the determined operating state of the closure element (3) and in particular at the same time the recorded additional information of the at least two users correspond to a specification.

7. The method according to claim 5, **characterised in that** the recorded information about the plurality of users corresponds to location information and/or calendar information and/or stored time profiles, wherein the location information and/or information from digital calendars and/or the time profiles about a plurality of users indicate that the plurality of users are absent in a spatial area that can be closed by the closure element (3).

8. The method according to one of claims 5 or 6, **characterised in that** a message is output when the operating state is a bolt retracted state and/or an open state and the information, in particular the location information, about the plurality of users indicates that the plurality of users, in particular all users about whom the sensor system (60) is supposed to have information, are absent.

9. The method according to one of the preceding claims, **characterised in that** the message is output on a user device (65), in particular a mobile phone, wherein the message is output on the user device (64), in particular a mobile phone, of a first user, wherein the user device (64) of the first user is the one of the plurality of user devices (64) that is located within a maximum distance from the sensor device (1) and/or is closest to the sensor device (1).

10. The method according to claim 8, **characterised in that** the message is output on a further user device (64), in particular a mobile phone, if the operating state of the closure element (3) does not change within a predetermined period of time and/or the sensor system (60) does not receive a message within the predetermined period of time that the user has acknowledged the message.

11. A sensor system (60), preferably designed to carry out a method according to one of the preceding claims,
having a sensor device (1) for detecting at least one operating state a closure element (3), and
having an electronic device, in particular a higher-level computing unit (61), for outputting a message
• wherein the sensor device (1) is designed to determine a current operating state of the closure element (3) by means of at least one sensor (20),
• the sensor system (60), in particular the electronic device, is designed to record additional information which is independent of the sensor device (1) and/or the closure element (1),
• and the electronic device is designed to output a message if at least the determined operating state of the closure element (3) and, in particular at the same time, the recorded additional information correspond to a specification, **characterised in that** the additional information is information about at least one user
wherein the information about the user is location information, wherein the location information corresponds to the location information of the user device, the user or
wherein the information about the user corresponds to a time profile or time information from a digital calendar of the user.

## Revendications

1. Procédé (100, 200, 300) permettant d'émettre un message d'un système de capteurs (60) pour un élément de fermeture (1), en particulier une porte ou une fenêtre, dans lequel le procédé peut être exécuté avec le système de capteurs, dans lequel le système de capteur est réalisé avec un dispositif de capteur (1) permettant de détecter au moins un état de fonctionnement de l'élément de fermeture (3), et
avec un dispositif électronique, en particulier une unité de calcul de niveau supérieur (61), pour l'affichage d'un message sur un appareil utilisateur, comportant les étapes suivantes :
• détermination d'un état de fonctionnement actuel de l'élément de fermeture (3) au moyen d'au moins un capteur (20) du dispositif de capteur (1) du système de capteurs (60),
• capture d'une information supplémentaire, qui est indépendante du dispositif de capteur (1) et/ou de l'élément de fermeture (1),
• et affichage d'un message, si au moins l'état de fonctionnement déterminé de l'élément de fermeture (3) et l'information supplémentaire capturée correspondent à une spécification,
**caractérisé en ce que** l'information supplémentaire est une information concernant au moins un utilisateur, dans lequel l'information sur l'utilisateur est une information de lieu, dans lequel l'information de lieu correspond à une informations de lieu de l'appareil utilisateur (64), en particulier du téléphone mobile, de l'utilisateur, en particulier sur la base de données de navigation par satellite et/ou de localisation GSM.

2. Procédé (100, 200, 300) permettant d'émettre un message d'un système de capteurs (60) pour un élément de fermeture (1), en particulier une porte ou une fenêtre, dans lequel le procédé peut être exécuté avec le système de capteurs, dans lequel le système de capteur est réalisé avec un dispositif de capteur (1) permettant de détecter au moins un état de fonctionnement de l'élément de fermeture (3), et
avec un dispositif électronique, en particulier une unité de calcul de niveau supérieur (61), pour l'affichage d'un message sur un appareil utilisateur, comportant les étapes suivantes :
• détermination d'un état de fonctionnement actuel de l'élément de fermeture (3) au moyen d'au moins un capteur (20) du dispositif de capteur (1) du système de capteurs (60),
• capture d'une information supplémentaire, qui est indépendante du dispositif de capteur (1) et/ou de l'élément de fermeture (1),
• et affichage d'un message, si au moins l'état de fonctionnement déterminé de l'élément de fermeture (3) et l'information supplémentaire capturée correspondent à une spécification,
**caractérisé en ce que** l'information supplémentaire est une information concernant au moins un utilisateur, l'information concernant l'utilisateur correspond à un profil temporel ou à une information temporelle provenant d'un calendrier numérique de l'utilisateur.

3. Procédé selon la revendication 1 ou 2, **caractérisé,**
**en ce qu'**un changement dans l'état de fonctionnement de l'élément de fermeture (3) est capturé et, comme condition supplémentaire pour l'émission du message, un changement dans l'état de fonctionnement de l'élément de fermeture (3) s'est produit, en particulier, **en ce que** le dispositif de capteur (1) comprend un dispositif de détection (53) permettant de reconnaître un éventuel changement d'état de fonctionnement.

4. Procédé selon l'une des revendications précédentes, **caractérisé,**
**en ce qu'**un message est toujours émis, lorsque le système de capteur (60) reçoit un ordre de détermination de l'état de fonctionnement et/ou lorsque le système de capteur (60) détecte que le capteur (20) se trouve en dehors d'une position de fonctionnement.

5. Procédé selon l'une des revendications précédentes, **caractérisé,**
**en ce que** le dispositif de capteur (1) comprend une unité d'émission et/ou de réception (62) , par le biais de laquelle l'état de fonctionnement de l'élément de fermeture (3) est transmis à une unité de calcul de niveau supérieur (61), dans lequel l'unité de calcul (61) est située à l'extérieur du dispositif de capteur (1) et l'unité de calcul (61) décide de l'émission du message, dans lequel en particulier l'unité de calcul (61) capture l'information supplémentaire sans communication avec le dispositif de capteur (1).

6. Procédé selon l'une des revendications précédentes, **caractérisé en ce que** le procédé comprend les étapes suivantes :
• capture de plusieurs informations supplémentaires, dans lequel au moins deux utilisateurs différents capturent respectivement une information comme information supplémentaire,
• et émission du message, si au moins l'état de fonctionnement déterminé de l'élément de fermeture (3) et en particulier en même temps les informations supplémentaires capturées des au moins deux utilisateurs correspondent à une spécification.

7. Procédé selon la revendication 5, **caractérisé en ce que** les informations capturées concernant les plusieurs utilisateurs correspondent à des informations de lieu et/ou des informations de calendrier et/ou des profils temporels stockés, dans lequel les informations de lieu et/ou les informations provenant de calendriers numériques et/ou les profils temporels concernant plusieurs utilisateurs indiquent que les plusieurs utilisateurs sont absents dans une zone spatiale qui peut être fermée par l'élément de fermeture (3).

8. Procédé selon l'une des revendications 5 ou 6, **caractérisé,**
**en ce qu'**un message est émis, si l'état de fonctionnement est un état de pêne rétracté et/ou un état ouvert et les informations, en particulier les informations de lieu, concernant les plusieurs utilisateurs indiquent que les plusieurs utilisateurs, en particulier tous les utilisateurs, pour lesquels le système de capteur (60) doit disposer d'une information, sont absents.

9. Procédé selon l'une des revendications précédentes, **caractérisé,**
**en ce que** le message est émis sur un appareil utilisateur (65), en particulier un téléphone mobile , dans lequel le message est émis sur l'appareil utilisateur (64), en particulier un téléphone mobile d'un premier utilisateur, dans lequel l'appareil utilisateur (64) du premier utilisateur est celui de la pluralité d'appareils utilisateurs (64), qui se trouve à une distance maximale du dispositif de capteur (1) et/ou est le plus proche du dispositif de capteur (1).

10. Procédé selon la revendication 8, **caractérisé en ce que** le message est émis sur un autre appareil utilisateur (64), en particulier un téléphone mobile , si l'état de fonctionnement de l'élément de fermeture (3) ne change pas pendant une période de temps prédéterminée et/ou si le système de capteur (60) ne reçoit pas de message pendant la période de temps prédéterminée, indiquant que l'utilisateur a pris connaissance du message.

11. Système de capteur (60), de préférence conçu pour mettre en oeuvre un procédé selon l'une des revendications précédentes,
comportant un dispositif de capteur (1) pour la détection d'au moins un état de fonctionnement
d'un élément de fermeture (3), et
comportant un dispositif électronique, en particulier une unité de calcul de niveau supérieur (61), pour l'émission d'un message
• dans lequel le dispositif de capteur (1) est conçu pour déterminer un état de fonctionnement actuel de l'élément de fermeture (3) au moyen d'au moins un capteur (20),
• le système de capteur (60), en particulier le dispositif électronique, est conçu pour la capture d'une information supplémentaire, qui est indépendante du dispositif de capteur (1) et/ou de l'élément de fermeture (1) ,
• et le dispositif électronique est conçu pour l'émission d'un message, si au moins l'état de fonctionnement déterminé de l'élément de fermeture (3) et, en particulier en même temps, l'information supplémentaire capturée correspondent à une spécification,
**caractérisé en ce que** l'information supplémentaire est une information concernant au moins un utilisateur
dans lequel l'information sur l'utilisateur est une information de lieu, dans lequel l'information de lieu correspond à l'information de lieu de l'appareil utilisateur, de l'utilisateur ou
l'information concernant l'utilisateur correspond à un profil temporel ou à une information temporelle provenant d'un calendrier numérique de l'utilisateur.
